# EUROPEAN PATENT APPLICATION

(11) **EP 2 058 929 A1**
(43) Date of publication of application: **13.05.2009**
(21) Application number: 07800835.6
(22) Date of filing: 31.08.2007
(51) Int. Cl.: H02K 53/00, H02N 11/00

(54) **PERMANENT MAGNET GENERATOR**

(30) Priority: 01.09.2006 CN 200610124411; 01.09.2006 CN 200610124412; 01.09.2006 CN 200610124413; 01.09.2006 CN 200610124414; 01.09.2006 CN 200610124415; 01.09.2006 CN 200610124416; 01.09.2006 CN 200610124417; 01.09.2006 CN 200610124418; 01.09.2006 CN 200610124419; 01.09.2006 CN 200610124420; 01.09.2006 CN 200610124421; 01.09.2006 CN 200610124422; 01.09.2006 CN 200610124423; 01.09.2006 CN 200610124424; 01.09.2006 CN 200610124425; 01.09.2006 CN 200610124426; 01.09.2006 CN 200610124427; 01.09.2006 CN 200610124428; 01.09.2006 CN 200610124429; 01.09.2006 CN 200610124430
(71) Applicant: Fan, Houpeng, Xianning, Hubei 437100 (CN)
(72) Inventor: The designation of the inventor has not yet been filed
(74) Representative: Bongen, Renaud & Partner
(86) International application number: PCT/CN2007/002618
(87) International publication number: WO 2008/040145

(57) **Abstract**

Abstract: A permanent magnet generator induces induction electromagnetic charge at the tip of the conductor with variable cross section using the permanent magnetic field and outputs induction electromagnetic charge current and electrical energy so as to be able to generate electricity permanently without any external energy. The permanent magnet generator includes an induction electromagnetic charge generator (4), an induction electromagnetic charge conductor (I, K), an induction electromagnetic charge attractor (17, 32), an induction electromagnetic charge escape emitter (7), and an induction electromagnetic charge receiver (24, 25) etc..

## Description

### TECHNICAL FIELD

This invention relates generally to a power generator, which uses the permanent electromagnetic field to permanently induce the induced electromagnetic charges, which escape and emit and work permanently at the tip of the conductor with variable cross-section, to output the electrically induced charges / current and electrical energy, escaping and emitting the induced charges permanently and automatically without the use of any external energy, it relates particularly to the power generator that can induce permanently the escape and emission of charges on the conductor with variable cross-section in the permanent induction electromagnetic field.

### BACKGROUND OF THE INVENTION

The present power supplies comprise of chargeable batteries, fuel cells and other power supplies, however, all of them consume much energy and a great deal of raw materials; the common batteries that can not be charged like manganese/zinc carbon rod dry cells, and the batteries that can be charged limitedly in terms of charging quantity like the lithium batteries, fuel batteries, solar photovoltaic cells and other power supplies, they are devices transforming the chemical energy, solar energy or other energies into the electric energy. They share the common deficiency of low transformation and yield efficiency at high raw material and energy investment, short service life, and preservation of a handful of the energy charged each time. Except that the solar cells are subject to the space, time, environment and climate, all batteries will pollute the natural environment seriously, especially when they come into disuse, it has become a common concern waiting for urgent settlement. As the reserve of energy resources on the earth is limited, which decreases with each passing day, the biggest crisis the world and the mankind will be confronted with will be the energy crisis. In the fossil fuels all over the world, the exploitable and utilization years of petroleum, natural gas, uranium and coal left are 41 years, 61.9 years, 73 years and 230 years respectively. Restricted by the space, time, climate, environment and quantity, the renewable energies such as solar energy, wind energy, tidal energy, geothermal energy and biomass energy are negligible and short of supply and are far from satisfying the huge demands for energies by the rapid economic development all over the world and the daily increasing living standard of human being. The triple pressure of energy exhaust, energy crisis & environment pollution and economic development all over the world is to be settled by the inexhaustible, zero-use-fee, environment friendly and hi-tech new energies researched and invented by the world scientist, inventors, capitalists, insiders and entrepreneurs.

### SUMMARY OF THE INVENTION

This invention is designed to provide a kind of power generator to permanently induce the automatic escape and emission of electrical charges on the conductor with the variable cross-section in the electromagnetic field. The technical issue this invention solves will solve in a down-to-earth manner the ultimate crisis of all mankind-energy crisis and the biggest puzzle all over the world-environment pollution. This invention relates to a power generator, which uses the permanent electromagnetic field to permanently induce the permanently induced electromagnetic field and the induced electromagnetic charges, which permanently and automatically escape, emit and work at the tip of the conductor with the variable cross-section, and output induced charges, current and electrical energies. It is a kind of power generator that operates permanently without the use of any external energy. It falls into the category of energy electromagnetic force machine and the hi-tech & new energy.

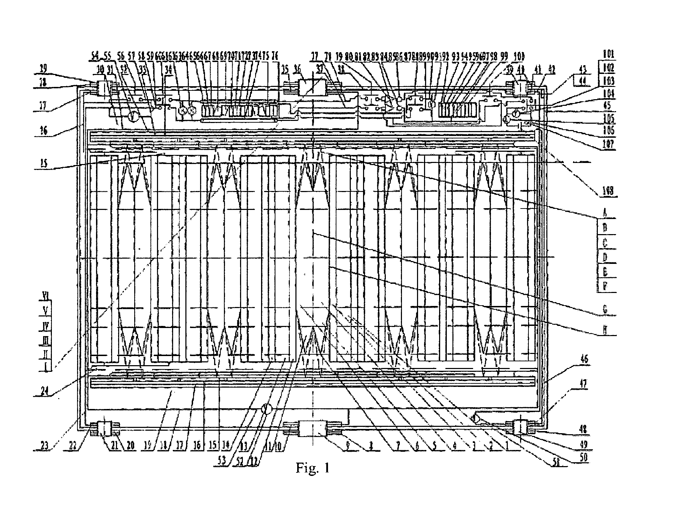

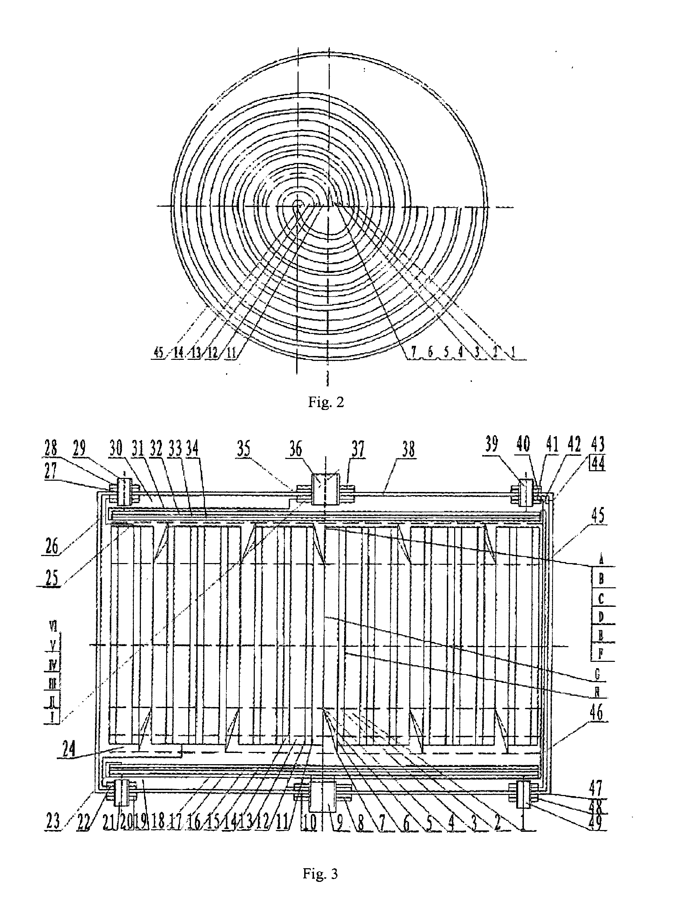

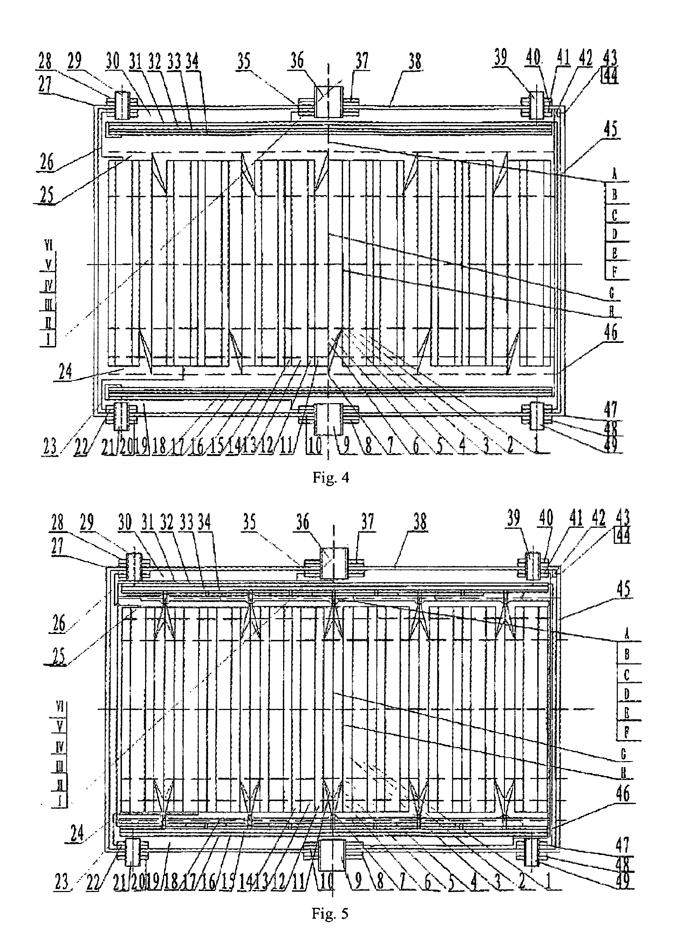

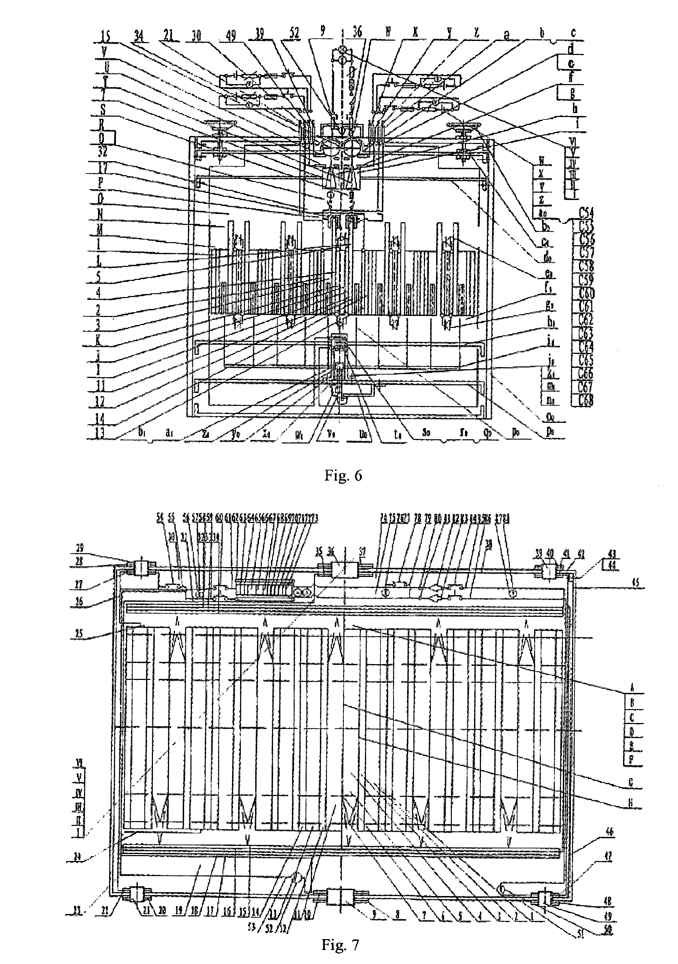

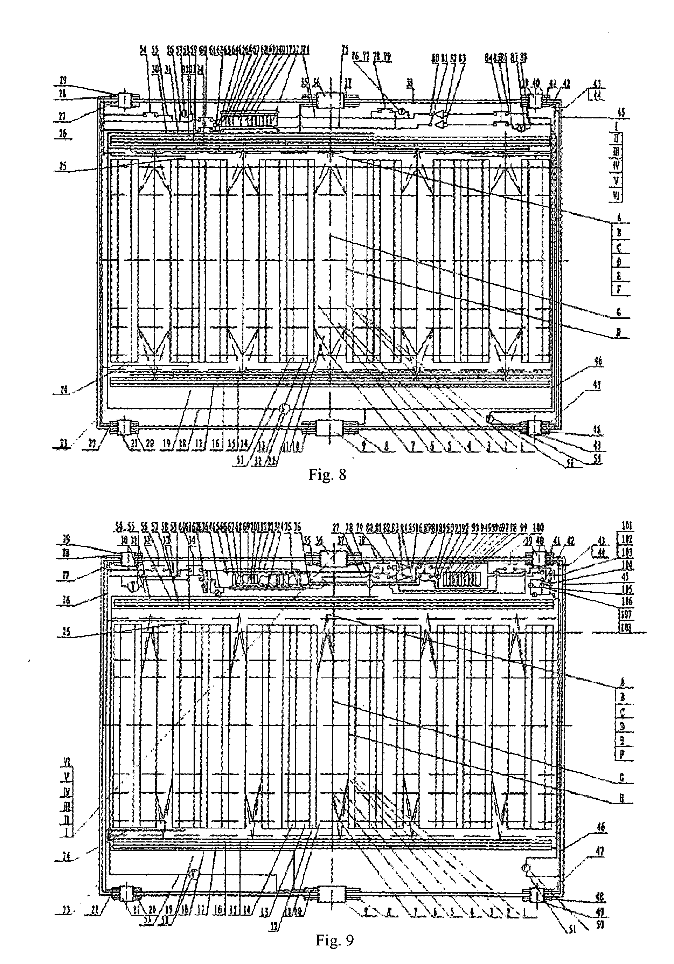

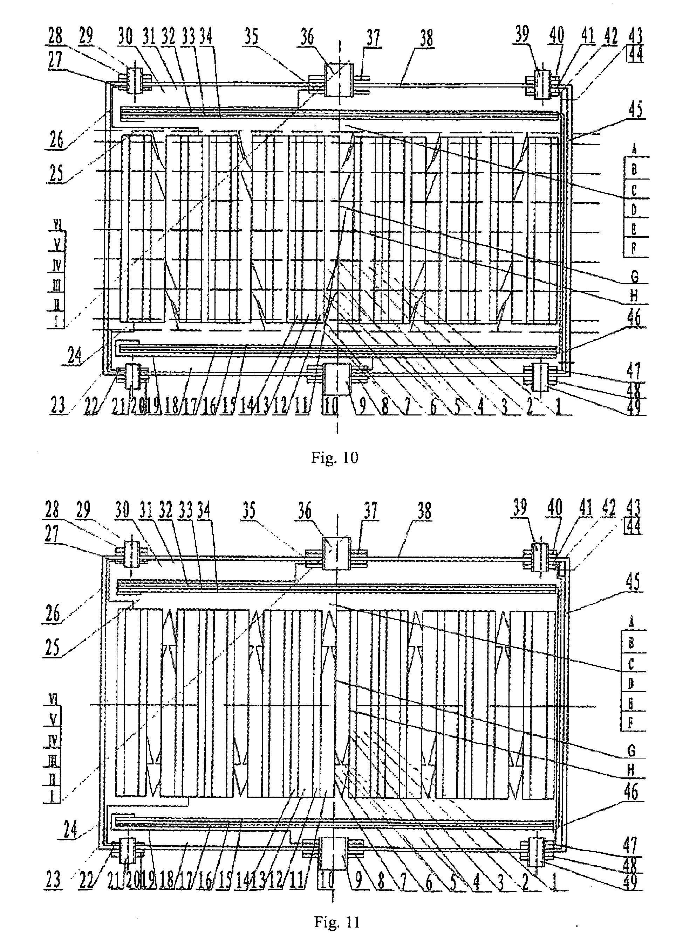

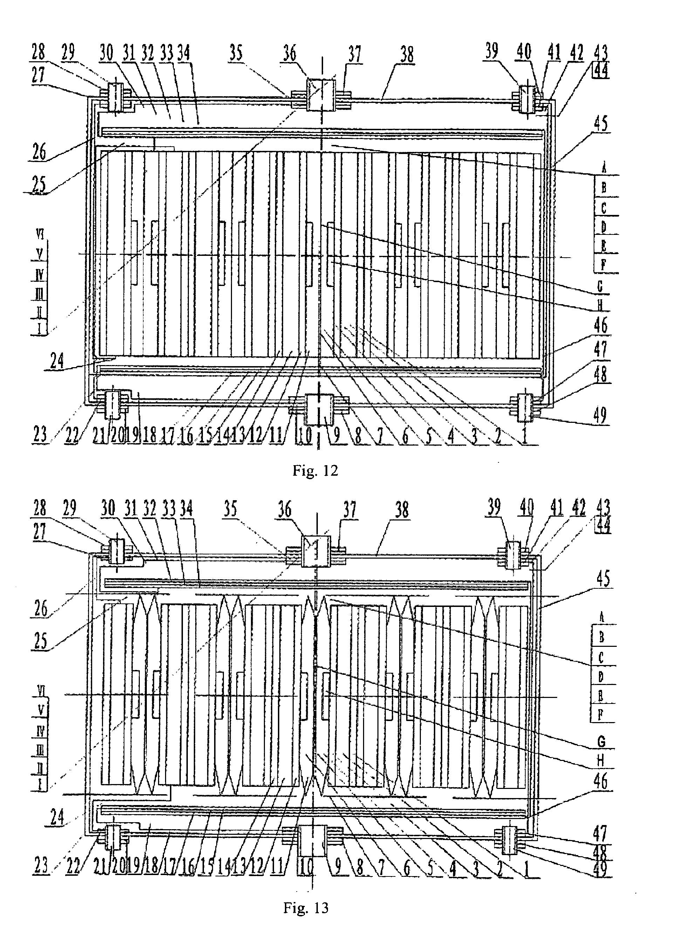

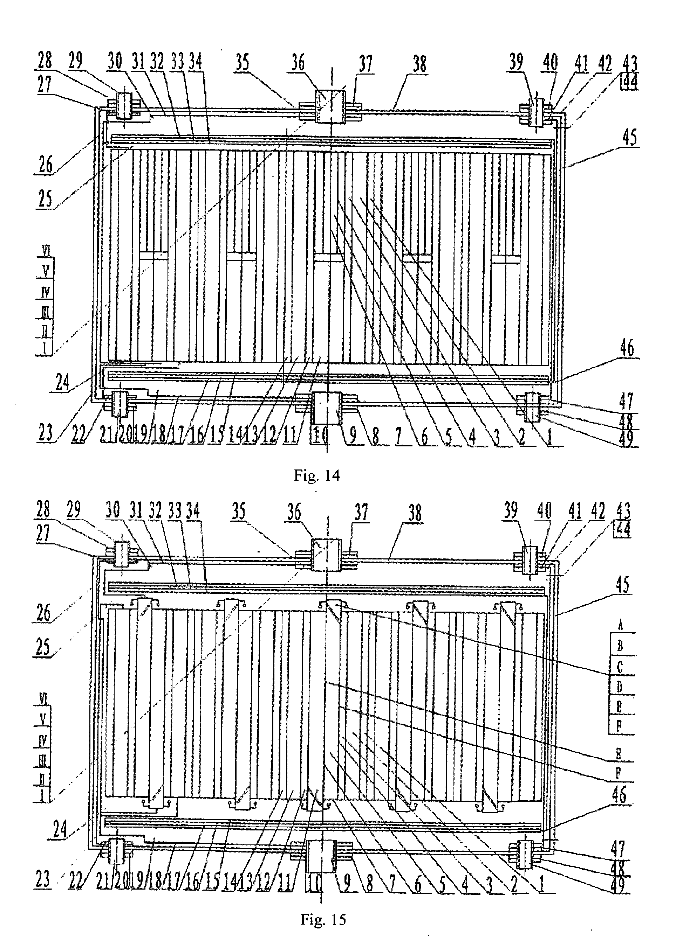

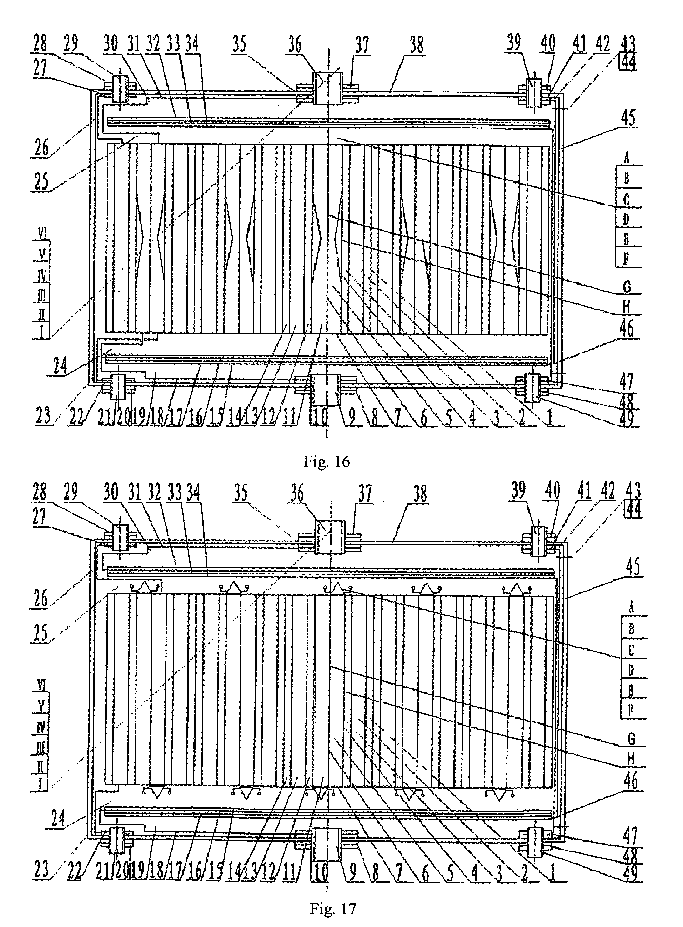

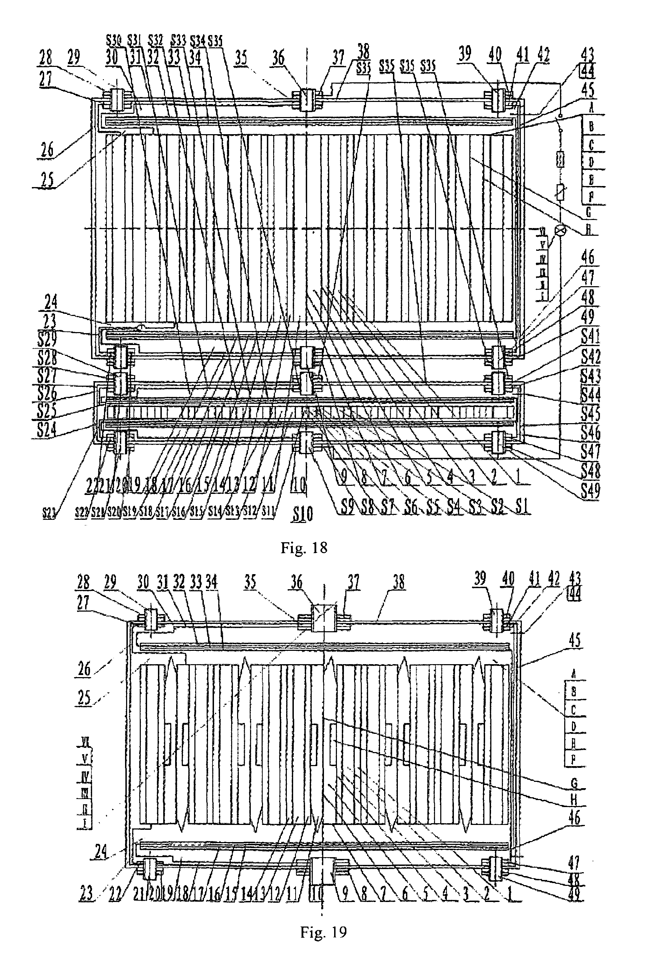

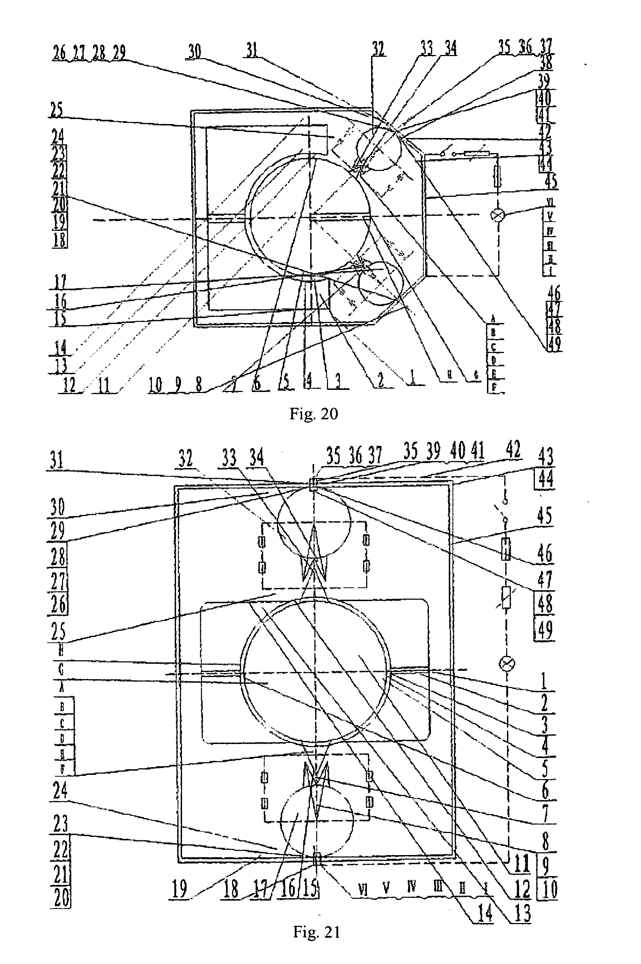

The technical solution applied to solve the technical issue of the said invented power generator that can permanently induce the automatic escape and emission of the electrical charges on the conductor with the variable cross-section: the power generator (Figure 1, Figure 3 ~ Figure 21) that is invented and designed in accordance with the Physical Principles, Electromagnetic Principles, Mechanics Theory, and Dynamics Theory to permanently induce the automatic escape and emission of the electrical charges on the conductor with the variable cross-section comprises mainly of twenty-nine parts, including the permanent electromagnetic field, induced electromagnetic field induced electromagnetic charges generator, one-way communication conductor inside the power source of the induced electromagnetic charges, induced electromagnetic force electromagnetic source and induced electromagnetic charge generator, induced electromagnetic charge attractor, induced electromagnetic charge escape emitter, induced electromagnetic charge receiver, induced electromagnetic charge emission accelerator, automatic control / regulating static electromagnetism shield, automatic controller for static electromagnetism shielding / regulating, manpower automatic control regulator for current from the electromagnetic source, electromagnetic source output voltage pressurizing regulator, electromagnetic source once-only starter, power source output switch circuit, permanent electromagnetic field permanent amplifying charger, attractor charger , accelerator charger, machine body, excitation power generation / charging friction power generation or light-powered battery, chargeable environment friendly permanent-operating power source, charged charge escape emitter, charged charge receiver, chargeable capacitor charging / power cutting/ power generating switch circuit, charging/ generating voltage transforming / pressurizing control circuit, charging/ generating/ accumulating feedback circuit, charging / generating current / electric work control regulator circuit, charge internal load voltage regulating circuit, charge amplifier. It features the following: the induced electromagnetic charge generator is installed on the inner side of the permanent electromagnetic field, and the plug-in / extraction type reciprocally operating automatic control / regulating static electromagnetism shield and static electromagnetism screen net with the vibration frequency of f≥o is installed between the permanent electromagnetic field and the induced electromagnetic charge generator, on the inner side of the induced electromagnetic charge generator, the one-way communication conductor inside the induced electromagnetic charge power source is installed, and the induced electromagnetic charge generator induced electromagnetic charges output end is connected to or integrated with the induced electromagnetic force power source and the induced electromagnetic charge generator. The induced electromagnetic charge attractor is installed on the voltage output end of the induced electromagnetic force electromagnetic source and the induced electromagnetic charge generator, the induced electromagnetic force power source and the induced electromagnetic charge generator voltage output end are connected to the induced electromagnetic charge escape emitter, the head of tip of the induced electromagnetic charge escape emitter may be aligned or not to the center of the induced electromagnetic charge receiver and installed accordingly, the induced electromagnetic charge emission accelerator is installed in the middle of or on the external side of the induced electromagnetic charge escape emission accelerator, one end of the power source voltage manpower automatic regulator is connected to the induced electromagnetic charge receiver and the other end is connected to the positive or negative pole of the power source. The power source manpower automatic regulator is connected to the induced electromagnetic charge receiver, the power source once-only starter is connected to the permanent electromagnetic field, the positive and negative poles of the power source output switch circuit are connected to the positive and negative poles of the power source and the permanent electromagnetic field respectively, the charging / generating switch circuit is connected to the chargeable environment friendly permanent-operating power source, the power-cut / generating switch circuit is connected to the chargeable environment friendly permanent-operating power source, the generating /charging voltage pressurizing control / regulator circuit is connected to the charging environment protection power source, the charging / generating / accumulating feedback circuit is connected to the chargeable capacitor, the charging / generating voltage / current control regulator circuit is connected to the chargeable environment friendly permanent-operating power source, the charger internal load and the pressurizing circuit are connected to chargeable environment friendly permanent-operating power source, the charge amplifier is connected to the chargeable environment friendly permanent-operating power source, the power source, as a whole, is installed inside the machine body, the permanent electromagnetic field charger is connected to the permanent electromagnetic field, the attractor charger is connected to the attractor, the accelerator charger is connected to the accelerator, light-powered battery that is charged by friction is connected to the chargeable capacitor, the chargeable capacitor is connected to the chargeable environment friendly permanent-operating power source, the charging is environment friendly and permanent. The work principle of the charge escape emitter power generator for conductor with variable cross-section in the permanently induced electromagnetic field is that after the common light or the sun's rays irradiate the light-powered battery or the power-lighted battery generates electricity through friction, there is the electric potential difference, voltage, in other words, between the positive and negative poles of the battery charged by friction or the solar cell, the separated positive and negative electrical charges will charge the chargeable capacitor, the solar battery and the chargeable capacitor charge the permanent electromagnetic field of the chargeable environment friendly permanent-operating power source simultaneously, the chargeable environment friendly permanent-operating power source continuously emits and transfers the electromagnetic charges to the permanent electromagnetic field of the power generator for escape and emission of charges on conductor with the variable cross-section in the permanently induced electromagnetic field for charging, so as to induce inside the electromagnetic force power source and the induced electromagnetic charge generation emitter to induce a great amount of induced electromagnetic charges through induction, at the same time, it, under the effects of the induced electromagnetic charge emission accelerator, emits continuously and accumulatively the positive and negative charges to the induced electromagnetic receiver through the induced electromagnetic charge escape emitter and the induced electromagnetic charge attractor, the induced charge receiver continuously and accumulatively receives a great amount of positive and negative charges and continuously and permanently outputs a great amount of the electrical charges and current to the loads outside the power source through the positive and negative poles of the power source, so as to produce the electrical energy.

Overall technical features of power generator for escape and emission of electrical charges on conductor with the variable cross-section in the permanently induced electromagnetic field are as follows: first, invent, create and scientifically discover and apply the permanent electrical field; second, invent and apply the permanently induced electromagnetic field of the permanent electrical field; third, invent and apply the permanent electromagnetic field to make the metal conductors like the induced charge generator and the one-way communication conductor inside the induced charge power source inside the permanent electromagnet field electromagnetically induced, so as to separate the positive and negative induced electrical charges; fourth, invent, create and scientifically discover and apply the theory of permanent electromagnetic field's induction of single or dual variable cross-section variable linearity taper end / bevels, or metal conductor tip with different or equivalent gradient of the electromagnetic field, the induced electromotive force power source and the induced electrical charge power generator, in other words, and the theory of induced electrical charge escape emitter's tip end escapes and emits the electrical charges; fifth, invent, create and scientifically discover and apply the charging light-powered battery or the battery charged by friction, charged capacitor, chargeable environment friendly permanent-operating power source, charging / power cut-off switch, assembled permanently operating power source permanent electrical field permanently operating amplifying charger to assure that the permanent operating power source continuously and permanently output induced electrical charges and electrical energy. In other words, invent, create and scientifically discover the energy creation principle of the created energy: P_{created energy}=F_{created energy}·R·Φ>0, △P_{created} energy=F_{created energy}·R·△Φ=R·N _{created energy}·t>0, conservation of energy of uncreative energy, P_{created energy}=0, △ P_{created energy}=0, black hole energy dissipation principle △P =P _{black holes} <0, △P _{black hole} <0 and law of energy non-Conservation ○,1 P_{created energy}=F_{created energy}·R·Φ>0, △P_{created energy}=F_{created energy},·R·△Φ=R·N _{created energy}·t>0, ○,2 P_{created energy} =0, △ P_{created energy} =0, ○,3 △P =P_{black hole}<0, △P_{black hole}<0.

The main theoretical principle of this invention is that a permanent electrical field is formed when the parallel-plate capacitor is insulated, the permanent electrical field whose electrical field intensity is Eo is formed by the one-off charging charges, another pair of parallel plates that are longer, shorter, wider or thinner than the permanent electrical field is set in the middle of the permanent electrical field and this pair of parallel plates is the induced charge generator. In addition, it is positively or reversely connected within Eo scope to the two parallel plates of the induced charger generator within Eo scope through the induced electrical charge one-way communication conductor, conductor connector or crystal diode, in other words. Being electrically induced by the permanent electrical field, the positive and negative charges of the two parallel plates of the conductor of the induced electrical charge generator separate, the positive charges move along Eo direction of the permanent electrical field and the negative charges move towards the opposite direction of the permanent electrical field, after the induced positive charges and negative charges separate and reach a balance during the opposite motion, the induced electrical field intensity of the induced electrical charge generator is E₁, and the coefficient of induced electrical field is k_{E1}, so, E₁ = k_{E1}·Eo, ε₁ = k_{ε1}·εₒ. If the corresponding parallel plates of Eo and E₁ are equivalent to each other in respect of length and width, especially if they are even in uniform thickness, boast the same thickness and they superpose in respect of relative position of the projection, then under the effects of Eo, the induced charges of E₁ can flow only between the positive and negative parallel plates of the induced charges generator and they can't flow outward along directions other than Eo or E₁ as a balance has been reached, it is difficult for the induced electrical charges to become vertical to Eo or E₁ direction to flow positively or reversely to Eo or E₁, but, when the two parallel pole plates of the induced electrical charge generator are longer, shorter, wider or thinner than the parallel plates of the permanent electrical field or equal to the parallel plates of the permanent electrical field in terms of length and width, the induced electromotive force power source and the induced electrical charge generator in other words, or when the two parallel electrode plates of the induced electromotive force power source and the induced charge generator are made into the cuniform that is thick internally and thin externally or the taper bevel / curvature surface tipped electrode plate on the edges or areas of the two ends and the two parallel plates of the induced charge generator are the acute angle tipped ends on the both ends, the induced electromotive force power source and the induced electrical charge generator in other words, the electrical conductor with different linearity, i.e., the variable linearity conductors with larger linearity maintains the smaller electrical charge density and the variable linearity conductors with smaller linearity maintains bigger electrical charge density. The theory of "automatic escape and emission of electrical charge effect at the tip of electrical conductor with the variable cross-section and variable linearity" is applied to the escape and emission of induced electrical charges at the tip of the conductor with small linearity and high charge density. So, the induced charges along the permanent E will be generated at the tip of the electrically charged conductor with the variable linearity of the induced electromotive force power source and the induced charge generator. The induced charges will escape and be emitted along the vertical direction or direction vertical to E₁ of the induced electrical field, in addition, the power source migration electrical field intensity, power source electrical charge escape and emission electrical field intensity E₂ and the power source migration electrical field coefficient, power source electrical charge escape and emission electrical field intensity K_{E2} will be formed, so, E₂ = K_{E2} · E₁ = K_{E1} · K_{E2} · Eo. The induced electromotive force of the induced electromotive force power source and the induced electrical charge generator is ε₂, the induced electromotive force coefficient is Kε₂. The quantity of electrical charges emitted of the induced electromotive force power source and the induced electrical charge generator is Q ₑₘᵢₛₛᵢₒₙ. The emitter output current of the induced electromotive force power source and the induced electrical charge generator is I power source emission = Q ₑₘᵢₛₛᵢₒₙ /t, so, by this point, the induced electromotive power source and the induced electrical charge generator of the electrical charge escape emitter power source generator for the conductor with the variable cross-section in the permanent electromagnetic field are able to show the induced electromotive forceε₂ to the part outside of the power source, are able to emit and output the induced electrical charges Q _{power source emission} to the part outside the power source, are able to output the induced current I _{power source emission} and are able to output electrical power P power source emission and are able to output the electrical energy A _{power source emission}. When the opposite induced electrical charge attractor, the attractive electrical field in other words, is set at the output tip of the induced electromotive power source and the induced electrical charge generator, the induced electrical charge of the induced electrical charge generator will move easily and largely towards the induced electromotive force power source and the induced electrical charge generator along direction vertical to Eo and E₁ under the attraction of the opposite charge in the induced electrical charge attractor electrical field, the relation between the induced charge attractor electrical field intensity E₃ and the attractor electrical field intensity K_{E3} is E₃ = K_{E3} · E₂ = K_{E3} · K_{E2} · K_{E1} · Eo. The relation of the induced electromotive forceε₃ of the induced charges attractor and the induced electromotive coefficient of the attractor Kε₃ is ε₃ = Kε₃ ·ε2 = Kε₃ ·Kε2 ·K ε₁ ·εₒ. The accordant electromotive force of the induced electrical charge generator and the induced charge attractor is ε_{accordant electromotive force} = ε_{power source} = ε₂ + ε₃ = (1 + Kε₃)·Kε₂ ·Kε₁ ·εₒ = K' ε₃·K₂·K₁·εₒ. When the conical, cuneiform and subuliform induced electrical charge escape emitter is connected at the output end of the induced electrical charge generator, the induced electrical charge will automatically escape and emit from the tip of the conductor, the relation between the electromotive force of the induced electrical charge escape emitterε₄ and the electromotive force coefficient of the escape emitter Kε₄ is ε₄ = Kε₄·ε_{accordant} = Kε₄·(ε₃ + ε₂) = Kε₄·Kε₃·Kε₂·Kε₁·εₒ.

When the induced charge accelerator is inserted between the induced charge escape emitter and the induced charge receiver or the induced charge accelerator is inserted on the both ends of the induced charge escape emitter and the induced charge receiver, the escape and emission of the induced charges are accelerated. The relation between the induced charge accelerator electromotive force ε₅ and the accelerator electromotive force coefficient Kε₅ is ε₅ = Kε₅·ε₄ = Kε₅·Kε₄·Kε₃·Kε₂·Kε₁·εₒ. After the automatic control / regulating static electromagnetism shield and static electromagnetism screen net with the vibration frequency of f≥0 that are plugged in and extracted reciprocally is installed in the gap between the permanent electrical field and the induced charge generator, △E₁ = E₁ - E ≥ o, the power source electromotive force, static shield electromotive ε₆, in other words, of the induced charge generator is increased, the relation between ε₆ and the static shield electromotive force coefficient Kε₆ is ε₆ = Kε₆·ε₅=Kε₆·Kε₅·Kε₄·Kε₃·Kε₂·Kε₁·εₒ. Assuming that the electromotive force of the battery that is charged by excitation and friction and solar cell is ε_{photoelectricity}, the output charge is Q _{photoelectricity}, the current is I photoelectricity, that the solar battery charges the chargeable capacitor and the chargeable environment friendly permanent-operating power source respectively, after the chargeable capacitor is charged steadily, the solar battery continues charging the chargeable environment friendly permanent-operating power source and the permanent electrical field, Q _{photoelectricity} = I _{photoelectricity} · t, I _{photoelectricity} = ε _{photoelectricity}/(R+r), ∴ Qε_{photoelectricity} = _{photoelectricity}/(R+r) · t. Similarly, the charging electrical capacitor Q _{chargeable capacitor} = I _{photoelectricity}·t, = ε_{photoelectricity}/(R+r)t. Similarly, the permanent electrical field charged charges of EEBG09 chargeable environment friendly permanent-operating power source is Q _{chargeable power source} = I photoelectricity' t = _{photoelectricity}/(R+r)·t electrical capacitor C _{chargeable power source} = Kµ·A/d², C = Q/U, U = Q/C. voltage U _{chargeable power source 0} = Q _{chargeable power source 0}/C_{chargeable power source 0}, the electrical field intensity of the permanent electrical field of EEBG09 chargeable environment friendly permanent-operating power source is E _{light-electrical power source 0} = U _{chargeable power source}/d. The induced charge generator of the chargeable environment friendly permanent-operating power source will induce the induced charges Q _{chargeable power source induction}, the relation between the induced electromotive force ε_{chargeable power source 1} and the induced electrical field intensity E _{chargeable power source 1} is E _{chargeable power source} 1 = µE _{chargeable power source 0}, at the static balance, ε_{chargeable power source} 1 = Q _{chargeable power source 1}/C_{chargeable power source 1} = K_{E chargeable power source 1}·E _{chargeable power source 0}, after the dynamic balance, Q _{chargeable power source 1} + △Q _{chargeable power source 1} +(- △Q _{chargeable power source 1}) = C _{chargeable power source 1}·U _{chargeable power source 1}; + △Q _{induction} =-(-△Q _{induction}); E _{chargeable power source permanent electrical field} = C _{constant}. E = ε_{charging 1}/d The induced electromotive force power source and the induced electrical charge generator of FHP - EEBG09 chargeable environment friendly permanent-operating power source will induce the induced charges Q _{chargeable power source induction2} and emit the induced electrical charges Q _{chargeable power source induction 2}, the relation between the induced electromotive force ε_{chargeable power source 2} and the induced electrical field intensity E _{chargeable power source 2} is E _{chargeable power source} 2 = K_{E2}·E _{chargeable power source 1} and ε_{chargeable power source} 2 = ε_{chargeable power source 2}, at the static balance, Q _{chargeable power source emission 2} = Q _{chargeable power source 2} = C _{chargeable power source 2}·U _{chargeable power source 2} = C _{chargeable power source 2}· E _{chargeable power source 2}·d₂.

When the induced electromotive force power source and the induced electrical charge generator emit the escape charges, they obey the theory of escape and emission dynamic balance of electrical charges generated by the induced electrical charges: Q _{chargeable emission power source 2}-△Q _{emission and escape power source} 2 = C _{chargeable power source 2}·U _{chargeable power source 2} = C _{chargeable power source 2}·ε_{chargeable power source 2} = C _{chargeable power source 2}·E _{chargeable power source 2}·d₂ and Q _{induction}-△Q _{induced emission and escape} = C _{induction}·d _{induction}·E _{induction}. The generated dynamically induced charges △Q _{dynamically induced} continuously and equally migrate into the dynamically induced electrical charge △Q _{dynamically induced} and continuously and equally escape and emit the induced charges Q _{static induced}, and the total induced charges Q _{dynamically induced} are relatively invariable in the permanent electrical field intensity E. The theory of constantly invariable induced electrical charges and the induced electrical charge creation is: Q _{total induced} = Q _{static induced} + △Q _{dynamic induced} + (- △Q _{dynamic induced emission}) = C _{induction} ·K_{E induction}·d _{induction} ·E _{permanent electrical field} = C _{induction}·d _{induction}·K_{E induction}·E _{permanent electrical field}. △Q _{dynamic induction} = △Q _{dynamic induction emission} E _{permanent electrical field} = C _{constant} Deduction of the law: ∵Q _{induction} = C _{induction}·U _{induction}, U _{induction} = E _{induction}·d _{induction}∴Q _{static induction} = C _{induction}·E _{induction} = E _{induction}·d _{induction}. Assuming that the dynamically created induced charges are + △ Q _{dynamicany induced}, the induced electrical charges that are dynamically migrated and emitted are - △Q _{dynamically induced and emitted}, the statically balanced static induced charges Q _{statically induced ∴}when the permanent electrical field intensity Eo = C is a constant, △Q = △Q, in Other words △Q _{dynamically induced} = △Q _{dynamically induced charges escape and emission}, to add the two formulas Q _{statically induced charges} = C _{induction}·E _{induction}·d _{induction} and △Q _{dynamically induced} = △Q _{dynamically induced escape and emission} to gain: Q total _{induced} = Q _{statically induced} + △ Q _{dynamically induced} + (-△ Q _{dynamically induced charges emission}) = C _{induction} ·E _{induction}·d _{induction} = C _{induction}·K_{E induction}·d _{induction}·E _{permanent magnetic field}, △Q _{dynamically induced} = △ Q _{dynamically induced charge emission} E _{permanent electrical field} = C _{constant}, the chargeable environment friendly permanent-operating power source continuously and permanently outputs the electrical charges Q _{power source 0} to the power generator for escape and emission of electrical charges on conductor with variable cross-section in the permanently induced electromagnetic field, the electrical field intensity Eo of the permanent electrical field of the power source is generated, the electromotive force of the permanent electrical field of the power source is εo, the amplifying coefficient of the amplifier is β(t), β(t) = E₀/E_{chargeable power source 0} = E _{power source 0}/E_{chargeable power source 0} ∴Q _{power source 0} = β(t)Q _{chargeable power source 0}, Eo = β(t)E _{chargeable power source 0} -this is the "Theory of electrical energy and electrical charges are created and amplified along with time passage". At last, the total electromotive force of the electrical charge escape and emission power source generator for conductor with the variable cross-section in the permanent electromagnetic field is: εₜₒₜₐₗ = ε_{photoelectricity 0}·Kε _{photoelectricity 1}·Kε_{chargeable electrical capacitor 2}·Kε_{chargeable power source 3}·β(t)·Kε_{power source electrical field 0}·Kε_{power source induction 1}·Kε_{power source induced emission 2}·K'ε_{attraction 3}·Kε_{emission and escape 4}·Kε _{acceleration 5}·Kε_{shield 6}. The total electrical field intensity E ₜₒₜₐₗ: E ₜₒₜₐₗ = E _{photoelectricity 0}·K_{E photoelectricity 1}·K_{E chargeable electrical capacitor 2}·K_{E chargeable power source 3}·β(t)·K_{E power source electrical field 0}·K_{E power source induction 1}·K_{E power source induction and emission 2}·K_{E attraction 3}·K_{E emission and escape 4}·K_{E acceleration 5}·K_{E shield 6}. Total current I ₜₒₜₐₗ: I ₜₒₜₐₗ = εₜₒₜₐₗ /R+r = Kε_{photoelectricity 1}·Kε _{electrical capacitor 2}·Kε_{chargeable power source 3}·β(t)·K'ε_{power source electrical field 0}·Kε_{power source induction 1}·Kε_{power source induced emission 2}·Kε_{attraction 3}·Kε_{emission and escape 4}·Kε_{acceleration 5}·Kε_{shield 6}·ε _{photoelectricity} /(R+r). Total electrical charges Q ₜₒₜₐₗ = I ₜₒₜₐₗε·t. Working principle: it can be concluded from the total electromotive force and total current formula above, when the external loads of the power source is connected to the power generator for escape and emission of electrical charges on conductor with variable cross-section in the permanently induced electromagnetic field, the electrical charges move and produce the current and the induced electrical charges of the induced electromotive force power source and the induced electrical charge generator decrease, the induced electrical charges of the induced electrical charge generator decrease, E₁ drops, E₂ drops and E₁ < Eo, E₂ < Eo, Eo - E₁ > 0, Eo - E₂ > 0, but, as Eo is constant and invariable, being induced by Eo, the positive charges on the induced charge generator move from the negative pole to the positive pole along Eo direction and the negative charges move from the positive pole to the negative pole opposite the Eo direction, positive charges on the positive pole increase and the negative charges on the negative pole increase. E₁ increases, E₂ increases, Eo - E₁ decreases, Eo - E₂ decreases, until the dynamic migration balance Eo - E₁ = 0 and Eo - E₂ = 0 are reached, i.e., Eo = E₁, Eo = E₂, as β(t) = β· t^{I}, variable t = constant, β = constant, the time t is longer, β(t) index will multiply. To sum up, at the instant the chargeable photoelectric cell / batteries charged by friction are connected to the power generator for escape and emission of the electrical charges on conductor with variable cross-section in the permanently induced electromagnetic field, they can indefinitely, continuously and permanently output by integral multiple or index multiple the electrical energy of the moving electrical charges.

This invention is a kind of power generator for escape and emission of electrical charges on conductor with variable cross-section in the permanently induced electromagnetic field, features and effects of this invention are: this power generator uses the permanent electromagnetic field to permanently induce the permanently induced electromagnetic field and the induced electromagnetic charges, which permanently automatic escape and emit and work at the tip of the conductor with variable cross-section, and outputs the induced charges, current and electrical energy and operate permanently without the use of any external energy.

### DESCRIPTION OF THE DRAWINGS

Figure 1-front view of Embodiment 8 of power generator for automatic escape and emission of electrical charges on conductor with variable cross-section in the permanently induced electromagnetic field.
Figure 2-vertical view of power generator for automatic escape and emission of electrical charges on conductor with variable cross-section in the permanently induced electromagnetic field.
Figure 3- front view of Embodiment 2 of this invention.
Figure 4-- front view of Embodiment 3 of this invention.
Figure 5-- front view of Embodiment 4 of this invention.
Figure 6-- front view of Embodiment 1 of this invention.
Figure 7-- front view of Embodiment 5 of this invention.
Figure 8-- front view of Embodiment 6 of this invention
Figure 9-- front view of Embodiment 7 of this invention
Figure 10-- front view of Embodiment 9 of this invention
Figure 11-- front view of Embodiment 10 of this invention
Figure 12-- front view of Embodiment 11 of this invention
Figure 13-- front view of Embodiment 12 of this invention.
Figure 14-- front view of Embodiment 13 of this invention
Figure 15-- front view of Embodiment 14 of this invention.
Figure 16-- front view of Embodiment 15 of this invention.
Figure 17-- front view of Embodiment 16 of this invention.
Figure 18-- front view of Embodiment 17 of this invention.
Figure 19-- front view of Embodiment 18 of this invention.
Figure 20-- front view of Embodiment 19 of this invention.
Figure 21-- front view of Embodiment 20 of this invention.

Specific numbers in the drawings are as follows:
1- insulating medium of the positive electrode plate of the permanent electrical field, 2- positive electrode plate of the permanent electrical field, 3-negative electrode insulating medium of the induced charge charger, 4-induced charge generator, negative electrode plate, 5- negative electrode plate of the induced electromotive force power source and the induced electrical charge generator, 6-positive electrode plate of the induced charge generator, 7-conductor tip of the induced electromotive force power source and the induced electrical charge generator - induced electrical charge escape emitter, 8- securing nuts of negative electrode of the power source, 9-wire post of negative electrode of the power source, 10-connection board of negative electrode of the power source, 11-positive electrode plate of the induced electromotive force power source and the induced electrical charge generator, 12-positive electrode insulating medium of the induced charge generator, 13-negative electrode plate of the permanent electrical field - 14-negative electrode plate insulating medium of the permanent electrical field, 15-negative electrode plate of the induced electrical charge receiver, 16-positive electrode insulating medium of the induced electrical charge accelerator, 17-positive electrode plate of the induced electrical charge accelerator - positive electrode plate of the induced electrical charge attractor, 18-lead of the output voltage meter of the power source, 19-insulating medium at the negative electrode end inside the machine body of power source, 20-charging and securing nuts of the negative electrode of the permanent electrical field, 21- charging and connecting post of the negative electrode of the permanent electrical field, 22-charging and connecting board of the negative electrode of the permanent electrical field, 23-charging lead of the negative electrode of the permanent electrical field, 24- insulating medium of the negative / positive electrode of the induced electrical charge receiver, 25-positive / negative electrode insulating medium of the induced electrical charge receiver, 26-charging lead of the positive electrode of the permanent electrical field, 27-connecting board for charging of the positive electrode of the permanent electrical field, 28-charging and securing nut of the positive electrode of the permanent electrical field, 29-charging and connecting post of the positive electrode of the permanent electrical field, 30-insulating medium at the positive electrode inside the machine body of the power source, 31-power transmission lead of the positive electrode of the power source, 32- negative electrode plate of the induced electrical charge attractor- negative electrode plate of the induced electrical charge accelerator, 33-insulating medium of the negative electrode of the induced electrical charge accelerator, 34-positive electrode plate of the induced electrical charge receiver, 35 -connecting board for the positive electrode of the power source, 36- wire post of the positive electrode of the power source, 37-securing nuts for the positive electrode of the power source, 38-machine body cover of the power source, 39-wire post for charging of the positive electrode of the induced electrical charge accelerator, 40- charging and securing nuts for the positive electrode of the induced electrical charge accelerator, 41-connecting board for charging of the positive electrode of the induced electrical charge accelerator, 42- connecting board for the positive electrode of the induced electrical charge accelerator, 43-coupling bolt for machine body cover of the power source, 44- coupling nut for machine body cover of the power source, 45-machine body of the power source, 46- charging lead for the negative electrode of the induced electrical charge accelerator, -47- connecting board for charging of the negative electrode of the induced electrical charge accelerator, 48- charging and securing nuts for the negative electrode of the induced electrical charge accelerator, 49- wire post for charging of the negative electrode of the induced electrical charge accelerator, 50- voltmeter for charged voltage of the induced electrical charge accelerator, 51-connecting lead for charger / voltmeter of the induced electrical charge induced electrical charge accelerator, 52- voltmeter and ammeter for power source output, 53- lead for power source output voltmeter, 54 - lead for power source output voltmeter-connecting lead for chargeable voltmeter of the permanent electrical field, 56-power supply cut-off switch, power cut-off / discharge switch of the permanently operating electrical field, 57-power cut-off switch lead of the permanent electrical field, 58-wire for charging switch of the negative electrode of the permanent electrical field, 59-lead for charging switch of the positive electrode of the permanent electrical field, 60-two-wire charging switch for the positive and negative electrode of the permanent electrical field of the permanently operating power source, 61-output voltmeter of the chargeable environment friendly permanent-operating power source, 62 - lead for output voltmeter of the chargeable environment friendly permanent-operating power source, 63- output adjustment compensation load for chargeable environment friendly permanent-operating power source, 64- lead of the output regulation compensation load of the chargeable environment friendly permanent-operating power source, 65-FHP-EEBG09 chargeable environment friendly permanent-operating power source, 66-chargeable environment friendly permanent-operating power source permanent electrical field negative electrode plate, 67 - chargeable environment friendly permanent-operating power source negative electrode plate insulating medium, 68-positive electrode plate of the induced charge generator of the chargeable power source -- positive electrode plate of the chargeable power source induced electromotive force power source and the induced electrical charge generator, 69-negative electrode plate of the induced electrical charge generator of the photoelectrically permanently operating environmental friendly power source generator- negative electrode plate of the induced electromotive force power source and the induced electrical charge generator of the chargeable environment friendly permanent-operating power source, 70- insulating medium of the positive electrode plate of the permanent electrical field of the chargeable power source, 71-positive electrode plate of the permanent electrical field of the chargeable power source, 72- insulating medium of the positive electrode plate of the induced electrical charge receiver of the chargeable power source, 73-positive electrode plate of the induced electrical charge receiver of the chargeable power source, 74-negative electrode plate of the induced electrical charge receiver of the chargeable power source, 75-charging lead for positive electrode plate of the permanent electrical field of the chargeable power source, 76-charging lead for the negative electrode plate of the permanent electrical field of the chargeable power source, 77-lead of negative electrode for the chargeable power source to feed back charging to the chargeable capacitor, 78-lead of positive electrode for chargeable power source to feed back charging to the chargeable capacitor, 79-two-wire switch for the chargeable power source to feed back the charging positive electrode and charging negative electrode to the chargeable capacitor, 80-feedback escape emitter of the positive electrode for the chargeable power source to feed back charging to the chargeable capacitor, 81-lead of the positive electrode of the feedback charging escape emitter, 82-feedback charging escape emitter of the negative electrode for the chargeable power source to feed back charging to the chargeable capacitor, 83-lead of the negative electrode of the feedback charging escape emitter, 84-feedback charging receiver of the negative electrode for the chargeable power source to feed back charging to the chargeable electrical capacitor, 85-lead for negative electrode of the receiver to feed back the charging, 86-feedback charging receiver of the positive electrode for the chargeable power source to feed back charging to the chargeable electrical capacitor, 87- lead for positive electrode of the receiver to feed back the charging, 88-two-wire switch for the chargeable capacitor to charge the positive electrode and negative electrode of the chargeable power source permanent electrical field, 89-lead for negative electrode of the voltmeter of the chargeable capacitor, 90-lead for positive electrode of the voltmeter of the chargeable capacitor, 91-voltmeter of the chargeable capacitor, 92-insulating medium of the chargeable capacitor, 93-positive electrode of the chargeable capacitor, 94- positive electrode plate of the chargeable capacitor, 95-insulating medium of the chargeable capacitor, 96-negative electrode plate of the chargeable capacitor, 97-negative electrode of the chargeable capacitor, 98-insulating medium of the chargeable capacitor, 99-chargeable electrical capacitor, 100-power-cut- discharge switch of the permanent electrical field of the chargeable power source, 101-two-wire switch of the positive electrode and negative electrode of the chargeable electric eye, 102-lead of positive electrode for two-wire switch of the chargeable electrical eye, 103-lead of negative electrode for two-wire switch of the chargeable electrical eye, 104-voltmeter of the chargeable electric eye, 105-ammeter of the chargeable electric eye, 106-lead of the chargeable electric eye, 107-common visible and invisible light by irradiation of the chargeable electric eye, 108-chargeable electric eye.I - loads, II - ammeter, III- voltmeter, IV- voltage regulator, V-safe, VI- electric switch, A- control-adjustable electric charge escape emitter, B- regulating shaft, C- shaft controller, D- bearing, E-bearing base, F- coupling bolts, G- one-way communication semi-conductor diode or one-way conductor, H- induced conductor of the curve variable cross-section in the induced electrical field; I - positive electrode plate of one-way communication conductor inside the power source of the induced charges, J-insulating medium, K-negative electrode plate of one-way communication conductor inside the power source of the induced charges, L - positive electrode plate of the induced electromotive force power source and the induced electrical charge generator of the induced electrical field, M - insulating medium, N - insulating medium, O - insulating medium, P-insulating medium, Q- switch for negative electrode of the power source, R- switch for positive switch of the power source, S- power source safe, T- subuliform or cuneiform positive electrical charge escape emitter of the induced electrical charges, U- negative electrode plate of the emission accelerator of the negative electrical charges of the induced electrical charge, V- positive electrode plate of the emission accelerator of the negative electrical charges of the induced electrical charge, W - output voltage regulator for electrical energy of the power source, X-wire post J of the negative electrode plate of the positive electrical charges of the accelerator, Y-electrode plate for positive electrical charges of the accelerator, Z- wire post F of the negative electrode plate of the attractor of the induced electrical charges, a- wire post E of the positive electrode plate of the induced electrical charge attractor, b-insulating medium, c-insulating medium, d-insulating medium, e- negative electrode plate of the positive electrical charge emission accelerator of the induced electrical charges, f-insulating medium, g-positive electrode plate of the positive electrical charge emission accelerator of the induced electrical charges, h-insulating medium, i-insulating medium, I-external loads of the power source, - mechanical and electrical equipment, VI- switch of the loads, V- safe of the loads, IV- voltage regulator of the loads, III- voltmeter of the loads, 65- power source of the charger for the permanent electrical field, 101- switch of the charger for the permanent electrical field, j- safe for charger of the permanent electrical field, k- voltage regulator for charger of the permanent electrical field, l-voltmeter of the charger of the permanent electrical field, m- power source of the charger for induced electrical charge attractor, n- switch of the charger for the attractor, o- safe for charger of the attractor, p- voltage regulator for charger of the attractor, q - voltmeter for charger of the attractor charger, r- power source of the charger for the negative electrical charges of the accelerator, s- switch of charger for the negative electrical charge of the accelerator, t- safe for negative electrical charge electric appliance of the accelerator, u- charging voltage regulator for negative electrical charges of the accelerator, v- voltmeter of charger for the negative electrical charges of the accelerator, w- power source of charger for positive electrical charges of the accelerator, x- switch of charger for positive electrical charges of the accelerator, y-safe of charger for positive electrical charges of the accelerator, z- voltage regulator for positive electrical charge charger of the accelerator, a0- voltmeter for positive electrical charge charger of the accelerator, b0- manpower and automatic control regulator for current of the power source- manpower and automatic regulator at the clearance between the induced electrical charge escape emitter and the induced electrical charge receiver, c0- stand for the induced electrical charge receiver, d0-stand for escape emitter of the induced electrical charges, e0 - one-way communication conductor inside the power source of the induced charges - crystal diode, f0 - insulating medium, g0 - one-way communication conductor inside the power source of the induced charges - crystal diode, h0 - slide of stand for static shield net, i0 - linkage of the static shield net, j0 - coupling bolt of the stand, k0 - elastic washer, l0 - securing bolt of the wire post, m0 - elastic washer, n0 - machine body of the power source, o0- securing stand of the static shield, p0 - shield net of the static shield, q0 -S or N pole of the electromagnetic coil, r0-coil of the electromagnetic core opening the static shield, s0 - core of the electromagnetic coil, t0 - N or S pole of the electromagnetic coil, u0 - shield opener of the static shield, i.e., locker, v0 - piston rod of the vibrative static shield, w0 - starter of the static shield of the power source, x0 - plug-in shield spring of the shield net of the static shield, y0 - piston cylinder of the vibrative static shield, z0 - S or N pole of the piston of the permanent magnet, a1- piston of the permanent magnet, b1- N or S pole of the piston of the permanent magnet.

### DETAILED DESCRIPTION OF THE PREFERRED EMBODIMENT

The features and role of the permanent electrical field: it is able to store the positive and negative electrical charges respectively, in essence, it is a pair of parallel metal conductor plates that are δ≧0 thick and d≧0 from each other, i.e., a pair of geometrical solid or compound geometrical solid of the parallel electrical capacitor and they are d≧0 from each other. The cross section, longitudinal section, or the cross section and longitudinal section of the positive electrode plate 2 and the negative electrode plate 13 of the permanent electrical field are a rectangle, square, trapezium, triangle, curve polygon, hybrid surface and curve with the tipped geometrical structure, circle, ellipse, geometrical solid compounded by several geometrical shapes, or any other geometrical solids, in the middle or any other parts of it, a rectangle, trapezium, triangle, arc, ellipse or any other geometrical solids with the cubage of V≧ 0 slot is designed and made or not. They'd better in the arc angle rectangle "□", so as to effectively prevent the electrical charges from escaping from the right angle of the rectangle, or the electricity leakage will be caused. In other words, the zero electricity leakage theory of preventing electrical charges from escaping and emitting by FHP slick, smooth, protrusion-free and edge-free conductor is applied. The right angle rectangle cross-section may be used as well. The part around the two parallel plates shall be filled by the insulating medium. A wire post or lead may be drawn or not from the positive and negative electrode plate respectively for charging and discharging. The metal parallel plates of the positive electrode and negative electrode of the permanent electrical field and all parallel metal electrode plates and the insulating medium between them shall be altogether made into the cylinder, or concentric cylinder whose quantity of coil or layer is i≧0, or the piled columniform, cuboid, elliptical cylinder, or any other geometrical solid, or any compound geometrical solid, or the geometrical solid or any other geometrical solid whose longitudinal section, or longitudinal section and cross section is the rectangle, square, trapezium, triangle, curve polygon, hybrid curve and surface with the tipped geometrical structure, elliptical form, geometrical solid compounded by several geometrical forms, or any other geometrical solids, the quantity of coil or layer of which shall be i≥0. They shall be made into the geometrical conductor, in the middle or any part of it, a rectangle, trapezium, triangle, arc, ellipse, any other geometrical form, or any other geometrical solid with the cubage of V≧0 slot shall be designed or made or not. The permanent electrical field is secured as a whole inside the machine body. The positive electrode plate and the negative electrode plate of the permanent electrical field are connected through the lead to the charging wire post for positive electrode and the charging wire post for negative electrode of the permanent electrical field respectively. Then, the lead for the charging positive electrode and the lead for the charging negative electrode are communicated with and connected respectively through the two-wire switch of the charging positive electrode and charging negative electrode to the charging output positive electrode and the charging output negative electrode of the chargeable environment friendly permanent-operating power source. Or, the lead for the charging positive electrode and the charging negative electrode of the charging electrical capacitor are connected respectively through the two-wire switch of the positive electrode and negative electrode of the permanent electrical field of the chargeable environment friendly permanent-operating power source to the positive electrode and negative electrode of the chargeable capacitor. Following that, the lead is communicated with and connected to the chargeable cell two-wire switch and solar cell or the battery charged by friction through the chargeable battery. At last, the lead is used to feed back the induced electrical charge receiver from the positive electrode and feed back the induced electrical charge receiver from the negative electrode. The positive electrode feeds back to the induced electrical charge escape emitter and the negative electrode feeds back to the induced electrical charge escape emitter. The feedback charging two-wire switch is connected respectively to the power transmission positive electrode and power transmission negative electrode of the invented power generator for automatic escape and emission of the electrical charges on the conductor with the variable cross-section in the permanently induced electromagnetic field.

Features and effects of the induced charge generator in the induced electrical field: it is a pair of parallel metal conductor plates or a pair of geometrical solids that are δ≧0 in thickness and d≥0 from each other, which are placed inside 2 and 13 of the permanent electrical field and are able to, being induced by the permanent electrical field, induce and separate the induced positive electrical charges and the induced negative electrical charges and are able to go parallel to the positive electrode plate and negative electrode plate of the permanent electrical field. The cross-section, longitudinal section, or cross-section and longitudinal section of the positive electrode plate 6 and negative electrode plate 4 of the induced electrical charge generator of the induced electromagnetic field shall be a rectangle, square, trapezium, triangle, curve polygon, hybrid curve and surface with the tipped geometrical structure, ellipse, geometrical solid compounded by several geometrical shapes, or any other geometrical solid, in the middle or any other part of which a rectangle, trapezium, triangle, arc, ellipse, or any other geometrical form with a cubage of V≧0 slot is designed or made or not. They'd better in the arc angle rectangle "□" to effectively prevent the electrical charges from escaping and being emitted from the right angle of the rectangle, or the electricity leakage will be caused. In other words, it meets the theory of zero electricity leakage preventing electrical charge escape and emission by FHP smooth, slick, protrusion-free, edge-free conductor. Or, the right angle rectangular cross-section may be used. The two parallel plates shall be filled by the insulating medium around. A wire post may be drawn or not from the positive electrode plate and negative electrode plate respectively for charging and discharging. The metal parallel plates of the positive electrode and negative electrode of the permanent electrical field and all parallel metal electrode plates and the insulating medium between them of this invention shall be altogether made into the cylinder, or concentric cylinder whose quantity of coil or layer is i≧0, or the piled columniform, cuboid, elliptical cylinder, or any other geometrical solid, or any compound geometrical solid, or the geometrical solid or any other geometrical solid whose longitudinal section, or longitudinal section and cross section is the rectangle, square, trapezium, triangle, curve polygon, hybrid curve and surface with the tipped geometrical structure, elliptical form, geometrical solid compounded by several geometrical forms, or any other geometrical solids, the quantity of coil or layer of which shall be i≥0. They shall be made into the geometrical conductor, in the middle or any part of it, a rectangle, trapezium, triangle, arc, ellipse, any other geometrical form, or any other geometrical solid with the cubage of V≧0 slot shall be designed or made. The two parallel electrode plates shall be filled by the insulating medium externally. The positive electrode and negative electrode shall go parallel to each other and shall be d≥0 from each other. The positive electrode plate and the negative electrode plate that are d≥0 from each other shall be one-way and bidirectional communicated and connected forwardly or reversely E₀ direction of the permanent electrical field by i(i=1, 2, ...n-1, n...) one-way communication diode. The positive electrode plate and negative electrode plate of the induced charge generator of the induced electrical field shall be longer, shorter or thinner than the positive electrode plate and negative electrode plate of the electrical field. It is ideal if they are the same in length, width and thickness. The positive electrode plate and negative electrode plate of the induced charge generator of the induced electrical field, on both ends or one end along the length or width direction, go parallel to and superpose or don't go parallel to and superpose respectively the positive electrode plate and negative electrode plate of the induced electromotive force power source and the induced electrical charge generator. They are communicated with and connected to each other, or are made into one, or the internal plane of the positive electrode plate and negative electrode plate of the induced electrical charge generator of the induced electrical field and the internal plane of the positive electrode plate and negative electrode plate of the induced electromotive force power source and the induced electrical charge generator are respectively communicated with or connected closely to the external side of the positive electrode plate and negative electrode plate of the one-way communication conductor inside the power source of the induced electrical charges, or they are integrated into one body. Features and principle of the induced charge generator of the induced electrical field: being induced by the electrical field intensity E₀ of the permanent electrical field, i(i=0,1,2......n-1,n, n + 1......) pair of induced positive electrical charges and induced negative electrical charges inside the induced charge generator in the induced electrical field. The induced positive electrical charges move from the negative electrode plate of the induced electrical charge generator to the positive electrode plate of the induced electrical charge generator along the electrical charge direction E₀ of the permanent electrical field. The induced negative electrical charges move from the positive electrode plate of the induced electrical charge generator to the negative electrode plate of the induced electrical charge generator against the electrical charge direction E₀ of the permanent electrical field. In addition, the induced electrical field intensity E₁ is formed inside the induced electrical charge generator. After the induced positive electrical charges and the induced negative electrical charges move respectively to the opposite directions and reach a static balance, E₁=K_{E1}·E₀, E₁ - K _{E1}·E0=0. The induced charge generator and the induced electromotive force ε₁=d _{E1}·E₁. As E₁= K_{E1}·E₀>0, ε₁= d _{E1}·E₁=K_{E1}·E₀, and Δε₁=ε₁- d _{E1}·E₁=ε₁- K_{ε1} =0, the induced electrical field intensity E₁ and the induced electromotive force ε₁ are induced out by permanent electrical field for the induced charge generator in the induced electrical field, but the electrical energy can not be exported externally.

Features and roles of the one-way communication conductor inside the power source of the induced electrical charges: the one-way communication conductor 5, 7 inside the power source of the induced electrical charges are placed inside the induced charge generator of the induced electrical field. They are a pair of parallel or unparallel metal conductor plates, which are δ≥0 in thickness and is d≥0 away from each other, or a pair of geometrical solids. The cross section, longitudinal section, or the cross section and longitudinal section of the positive electrode plate and negative electrode plate of the one-way communication conductor inside the power source of the induced charges are a rectangle, square, trapezium, triangle, curve polygon, hybrid surface and curve with the tipped geometrical structure, circle, ellipse, geometrical solid compounded by several geometrical shapes, or any other geometrical solids, in the middle or any other parts of it, a rectangle, trapezium, triangle, arc, ellipse or any other geometrical solids with the cubage of V≧0 slot is designed and made or not. They'd better in the arc angle rectangle "□" to effectively prevent the electrical charges from escaping and being emitted from the right angle of the rectangle, or the electricity leakage will be caused. In other words, the theory of zero electricity leakage preventing electrical charge escape and emission by FHP smooth, slick, protrusion-free, edge-free conductor is followed. Or, the right angle rectangular cross-section may be used. The two parallel plates shall be filled by the insulating medium around. A wire post may be drawn or not from the positive electrode plate and negative electrode plate respectively for charging and discharging. The metal parallel plates of the positive electrode and negative electrode of the permanent electrical field and all parallel metal electrode plates of this invention and the insulating medium between them shall be altogether made into a cylinder, or concentric cylinder whose quantity of coil or layer is i≧0, or the piled columniform, cuboid, elliptical cylinder, or any other geometrical solid, or any compound geometrical solid, or the geometrical solid or any other geometrical solid whose longitudinal section, longitudinal section, or cross section is the rectangle, square, trapezium, triangle, curve polygon, hybrid curve and surface with the tipped geometrical structure, elliptical form, geometrical solid compounded by several geometrical forms, or any other geometrical solids, the quantity of coil or layer of which shall be i≥0, in the middle or any part of it, a rectangle, trapezium, triangle, arc, ellipse, any other geometrical form, or any other geometrical solid with the cubage of V≧0 slot shall be designed or made or not. They shall be conductors in geometrical forms. They, being induced by the permanent electrical field respectively, shall be able to induce the induced positive electrical charges and the induced negative electrical charges, and allow the induced positive electrical charges to flow along E₀ electric force line of the permanent electrical field one way or round way. After the induced electrical charges reach a balance in terms of flowing, the induced positive electrical charges and the induced negative electrical charges will be respectively separated and isolated automatically on the external side of the positive electrode plate and the external side of the negative electrical charges of the one-way communication conductor inside the power source of the induced electrical charges, on a pair of parallel or unparallel semi-conductor plates that are parallel and equivalent or not in respect of length, width and thickness to the positive electrode plate and negative electrode plate of the permanent electrical field and boast a cross-section of rectangle or trapezium that is δ ≥ 0 in thickness, or i≥ 0 semi-conductor diode or one-way or bidirectional conductor material. The relative plane distance between the positive electrode plate and negative electrode plate of the one-way communication conductor inside the power source of the induced charges is d≥ or they are connected closely to the communication conductor or they are integrated into one. The same lead is used to connect the positive electrode plate, semi-conductor diode and the negative electrode plate unilaterally. The both ends of the positive electrode plate and the negative electrode plate are filled by the insulating medium. The external surface of the positive electrode plate and the external surface of the negative electrode plate of the one-way communication conductor inside the power source of the induced electrical charges are closely communicated and connected respectively to the internal surface of the positive electrode plate and the internal surface of the negative electrode plate of the induced charge generator, or they are united as a whole. Features and principle of the one-way communication conductor inside the power source of the induced charges: being induced by the E₀=C constant of the permanent electrical field, i≥0 pairs of the induced positive electrical charges and the induced negative electrical charges will be induced inside the one-way communication conductor in the power source of the electrical charges. At the same time, the induced positive electrical charges and the induced negative electrical charges move and migrate forwards or reversely the electric force line E₀ of the permanent electrical field towards the positive electrode plate and the negative electrode plate from the negative electrode plate and the positive electrode plate.

When the positive electrical charges and the negative electrical charges reach a static balance in terms of the flowing, the intensity of the induced electrical field is E₁' =K'·E₀ and the induced electromotive force is ε₁' = K'ε₁·E₀. There will be no flowing of the induced charges after they reach a balance in terms of migrating and flowing. The one-way communication conductor inside the power source of the induced charges becomes the separator for positive separation and reverse closing of the induced electrical charges. In other words, the one-way communication and one-way closing PN junction will be formed on the positive electrode plate and the negative electrode plate of the semi-conductor or on the semi-conductor diode. When K_{E1} is changed when the static shield is changed, E₁>E₀. Following that, the induced charges are restricted from migration and flowing. But, when the induced electromotive force power source and the induced electrical charge generator escape and emit the induced electrical charges △Q _{dynamically induced escape and emission} outside the power source, the induced charges △Q _{dynamically induced flowing 1} decreases. The electrical field intensity under the static and dynamic condition is E _{dynamic 1} < E _{static 1}, E _{dynamic 1}- E _{static 1} < 0, as E _{static 1}= E₀, ∴E _{dynamic 1}- E _{static 1}= E _{dynamic} 1- E₀, E _{dynamic 1} < 0. Besides, as permanent electrical field E₀=C, the one-way communication conductor inside the power source of the induced charges and the induced charge generator migrate and move in the induced charges +Q _{dynamically induced migration 2}. The induced charge migration and flowing +Q _{dynamically induced migration 1}, until a new static balance of induced electrical charge migration and flowing and a new dynamic balance of induced electrical charge migration and flowing are reached on the induced electrical charge generator. In other words, Q _{static total} =Q _{dynamic total} =Q _{statically induced} +Q _{dynamically induced dynamic migration and flowing} =-△Q _{dynamically induced escape and emission}; △Q _{dynamically induced migration and flowing} =△Q _{dynamically induced escape and emission}; Eₒ =C.

Features and role of the induced electromotive force power source and the induced electrical charge generator: they are a pair of parallel metal conductor plates or a pair of any geometrical solids that are placed inside 2, 13 of the permanent electrical field, are able to induce and separated respectively, being induced by the permanent electrical field, the induced positive electrical charges and the induced negative electrical charges, and are able to automatically escape and emit the induced positive electrical charges and the induced negative electrical charges to the induced electromotive force power source and the induced electrical charge generator 11, 12 and the part outside the permanent electrical field. At the same time, they are parallel to the positive electrode plate and the negative electrode plate of the permanent electrical field respectively. In essence, they are a pair of parallel metal conductor plates or a pair of any geometrical solid that are parallel or unparallel to each other, δ≥ 0 in thickness and d≥0 away from each. The cross-section, longitudinal section, or cross-section and longitudinal section of the positive electrode plate and negative electrode plate of the induced electrical charge generator of the induced electric field shall be a rectangle, square, trapezium, triangle, curve polygon, hybrid curve and surface with the tipped geometrical structure, ellipse, geometrical solid compounded by several geometrical shapes, or any other geometrical solid, in the middle or any other part of which a rectangle, trapezium, triangle, arc, ellipse, or any other geometrical form with a cubage of V≧0 slot is designed or made or not. They'd better in the arc angle rectangle "□" to effectively prevent the electrical charges from escaping and being emitted from the right angle of the rectangle, or the electricity leakage will be caused. In other words, the theory of zero electricity leakage preventing electrical charge escape and emission by FHP smooth, slick, protrusion-free, edge-free conductor is met. Or, the right angle rectangular cross-section may be used. The two parallel plates shall be filled by the insulating medium around. A wire post may be drawn or not from the positive electrode plate and negative electrode plate respectively for charging and discharging. The metal parallel plates of the positive electrode and negative electrode of the induced electromotive force power source and the induced electrical charge generator and all parallel metal electrode plates and the insulating medium between them of this invention shall be altogether made into a cylinder, or concentric cylinder whose quantity of coil or layer is i≥0, or made into a piled columniform, cuboid, elliptical cylinder, or any other geometrical solid, or any compound geometrical solid, or the geometrical solid or any other geometrical solid whose longitudinal section, or longitudinal section and cross section is the rectangle, square, trapezium, triangle, curve polygon, hybrid curve and surface with the tipped geometrical structure, elliptical form, geometrical solid compounded by several geometrical forms, or any other geometrical solids, the quantity of coil or layer of which shall be i≥0, They shall be made into the geometrical conductor, in the middle or any part of it, a rectangle, trapezium, triangle, arc, ellipse, any other geometrical form, or any other geometrical solid with the cubage of V≧0 slot shall be designed or made. The two parallel electrode plates are filled by the insulating medium around. The positive electrode plate and the negative electrode plate are parallel to each other and they are d≥0 away from each other. In addition, the positive electrode plate and the negative electrode plate that are d≥0 away from each other are communicated and connected unilaterally or bi-directionally forwardly or reversely E₀ direction of the permanent electrical field by i≥0 one-way communication diode. The positive electrode plate and negative electrode plate of the induced electromotive force power source and the induced electrical charge generator shall be shorter, longer than or equivalent to the positive electrode plate and negative electrode plate of the permanent electrical field in terms of the length, width and thickness. The positive electrode plate and negative electrode plate of the induced charge generator of the induced electrical field, on both ends or one end along the length or width direction, go parallel to and superpose or don't go parallel to and superpose respectively the positive electrode plate and negative electrode plate of the induced electromotive force power source and the induced electrical charge generator. They are communicated, connected and jointed into one body or the internal surface of the positive electrode plate and negative electrode plate of the induced electrical charge generator in the induced electrical field and the internal surface of the positive electrode plate and the negative electrode plate of the induced electromotive force power source and the induced electrical charge generator are communicated with and connected to respectively to the external surface of the positive electrode plate and the negative electrode plate of the one-way communication conductor inside the power source. Or, they are integrated. The induced electromotive force power source and the induced charge generator are any geometrical solids placed inside the permanent electrical field. The negative electrode of them is any random geometrical solid. The negative electrodes of them are any random geometrical solid, or geometrical conductor, or any random geometrical form, or several pairs of a pair of parallel or unparallel metal conductor plates, the internal or external of the parallel metal conductor plates of which and the parts outside the parallel metal conductor plates are able to, being induced by the permanent electrical field, induce the positive electrical charges and the induced negative electrical charges, automatically escape and emit respectively the induced electrical charges and the induced negative electrical charges from the tip of the subuliform or cuneiform metal conductor of the positive electrode plate and the negative electrode plate, the cross-section of which going parallel or unparallel to the positive electrode plate and negative electrode plate of the permanent electrical field is a rectangle, single-ended single-surface taper, single-ended single-surface cuniform, single-ended double-surface cuniform, single-ended single-surface pin, single-ended double-surface pin, double-ended single-surface taper, double-ended double-surface cuniform, double-ended double-surface pin, or double-ended double-surface taper. One or two positive electrode plates and one or two negative electrode plates of the induced electromotive force power source and the induced electrical charge generator are respectively communicated with and connected in parallel and coincidently along length or width direction to one end or two ends of the positive electrode plate and one or two ends of the negative electrode plate of the induced electrical charge generator, or integrated into one. The taper, cuniform, pin single-surface diagonal openings of the positive electrode plate and the negative electrode plate stand face to face, back to back, centrosymmetrically, or symmetrically along the axial core. The taper, cuniform pin, pointed double-surface skew openings of the positive electrode plate and the negative electrode plate stand face to face, back to back, symmetrically along the axial core, or centrosymmetrically. Except the channel left in advance as track for escape and emission of the induced electrical charges at the tip of the conductor, the remaining parts outside the two parallel plates shall be filled by the insulating medium or not. The two relatively parallel surfaces of the positive electrode plate and the negative electrode plate are fully and mutually communicated and connected and they are d≥0 away from each other. The positive electrode plate and the negative electrode plate of the induced electromotive force power source and the induced electrical charge generator are respectively jointed, communicated with and connected to the positive electrode plate and the negative electrode plate of the induced electrical charge generator, or integrated into one. After they are communicated or connected or integrated into one, the total length, width and thickness may be longer, wider, or thicker than those of the positive electrode plate and the negative electrode plate of the permanent electrical field or equivalent to those in these aspects. The principle, features and structure of the power generator for automatic escape and emission of the electrical charges on conductor with variable cross-section in the permanently induced electromagnetic field: the first is that the inventive creation and scientific discovery use the permanent electrical field; the second is that the invention uses the induced electromagnetic field of the permanent electrical field; the third is that the invention uses the principle that the permanent electromagnetic field separates the positive and negative induced charges after the metal conductor inside the permanent electrical field, i.e., the one-way communication conductor inside the induced charge generator and induced charge power source, generates the electromagnetic induction; the fourth is that the invention, creation and scientific discovery use the principle that charges are escaped and emitted from the tip of the metal conductor of variable cross section, variable linearity, conic shape, single or double slants, different or equal pitch in the permanent electromagnetic field, i.e., the tip of the induced electromotive power source and induced electrical charge power generator, as well as the induced electrical charge escape emitter; the fifth is that the invention, creation and scientific discovery use the rechargeable photoelectric or battery of charging by friction, charging capacitor, chargeable environment friendly permanent-operating power source, and permanent amplification charger of permanent power source and permanent electrical field that comprises of the charging switch and power cut switch, to ensure that the permanent power source continuously and permanently outputs the induced electrical charge and electric energy. The induced electromotive force of the induced electromotive force power source and the induced electrical charge generator is ε₂=K_{ε2}·ε₁, ε₂=K'_{E2}·E₂. The intensity of the induced electrical field is E₂=K_{E2}·E₀=K_{E2}/E₁=K_{E2}·K_{E1}·E₀. As the intensity of the permanent electrical field is E₀=C, the electrode plate intensity of the induced charges is C=Q/U=Q/ε=µ/K₀·A/d. The induced electrical field intensity is E= ε/d. The induced charges Q=q·V. The density of the induced charges is q =Q/V. So, the density of the induced charges is q =µ·K·A·E/V=µ·K·E /δ. In other words, the induced electrical charge density of the on the positive electrode plate and the negative electrode plate of the induced charge generator is q₁=µ₁·K₁·A₁·E₁/V₁=µ ₁·K₁·E ₁/δ₁=µ₁'k₁·K_{E1}·A₁·E₀/V₁=µ₁·K₁·K_{E1}·E₀/δ₁. In the same way, the density of induced electrical charges on the positive electrode plate and the negative electrode plate of the induced electromotive force power source and the induced electrical charge generator is q2=µ₂·K₂·A₂·E₂/V₂=µ₂·K₂·E ₂/δ₂=µ₂'k₂·K E₂·A₂·E₀/V₂=µ₂·K₂·K _{E2}·E₀ /δ₂. As the cross section of the induced electromotive force power source and the induced electrical charge generator is a subuliform, cuniform, pin, and pointed metal conductor, the thickness decreaseδ₂ of the positive electrode plate and the negative electrode plate of the induced electromotive force power source and the induced electrical charge generator is smaller than thickness decrease δ₁ of the positive electrode plate and the negative electrode plate of the induced electrical charge generator. So, the induced electrical charge density q₂ of positive electrode plate and the negative electrode plate of the induced electromotive force power source and the induced electrical charge generator is bigger than the induced electrical charge density q₁ of the positive electrode plate and the negative electrode plate of the induced electrical charge generator, in other words, δ₂ < δ₁, q₂ > q₁. As the end of the positive electrode plate and negative electrode plate of the induced electromotive force power source and the induced electrical charge generator is the pointed metal conductor that decreases / increases gradually from its middle part to its end, under the effect of the "small end intensive escape and emission effect"- the theory of the metal conductor within the metal conductor carried by the electrical charges with the variable dimension automatically escapes and emits externally from the tip end, the induced electrical charge will automatically emit the induced electrical charges from the tip of the pointed metal conductor and emit the induced electromotive ε_{induced emission}. Due to the density of the induced charges on the positive electrode plate and the negative electrode plate, the induced electromotive force power source and the induced electrical charge generator increases gradually when the pointed metal conductor decreases gradually. But, the bigger is the electrical charge density, the easier are the induced electrical charges to automatically escape and emit the induced electromotive force from the pointed metal conductor. So, the induced electromotive force power source and the induced electrical charge generator are able to constantly, chronically and ceaselessly export the induced charges, the induced current and the electrical energy outside the metal conductor. Before the induced electrical charges are escaped and emitted, the induced electrical charges reach a static balance due to the electrical induction of E₀=C. After the induced electrical charges are escaped and emitted, the induced electrical charges reach a dynamic balance due to the electrical induction of E₀=C. The static balance formula is: △Q _{static}=Q total ₚₒₛᵢₜᵢᵥₑ-Q _{total negative}=0Q_{static total induced}=C·ε_{static total} =(µ·k_{c}·A₁/d₁)·E₁=(µ·k_{c}·A₁/d₁)K_{E1}·E₀,E₀=C,△Q _{static total positive}=Q _{total positive i} - Q _{total positive i-1}=0. The dynamic balance formula is: Q _{dynamic induction total} =(µ·k_{c}·A₁/d₁)·K_{E1}E₀+(-△µ·k_{c}·A₂/d₂)·K_{E2}·K_{E1}E₀+Q_{static induction total} =△Q _{dynamic induction migration} +(-△Q _{dynamic induction escape and emission})+Q _{static induction total} △Q _{dynamic induction migration} =△Q _{dynamic induction escape and emission} =K _{conductor tip} q=K _{conductor tip}. µ₂·K₂·K_{E1} E₀/δ ₂Q_{static induction total} -C·ε_{static induction total}=(µ·k_{c}·A₁/d₁)K _{E1}·E₀△Q _{static} =Q _{static total positive} -Q _{static total negative} -0△Q _{dynamic total positive} =Q _{dynamic total positive i}-Q _{dynamic total positive i-1}=△Q _{dynamic induction escape and emission} E _{permanent electrical field=} C. When E _{permanent electrical field}=X is a variable, the dynamic balance formula shall be researched additionally. In other words, when the induced charges reach a static balance, the induced electromotive force power source and the induced electrical charge generator will not escape and emit the induced positive electrical charges and the induced negative electrical charges externally. The induced positive electrical charges and the induced negative electrical charges inside the induced charge generator reach a balance in terms of the migration and flowing, no migration and flowing of the induced electrical charges will take place and no induced electrical charge and electrical energy will be exported externally; when the induced charges reach a dynamic balance, the induced electromotive force power source and the induced electrical charge generator will escape and emit the induced positive electrical charges and the induced negative electrical charges externally as the end of the positive electrode plate and negative electrode plate of the induced electromotive force power source and the induced electrical charge generator is a taper, cuniform, or pin and the induced electrical charge -△Q decreases constantly. In addition, the induced electromotive force power source and the induced electrical charge generator will induce the equivalent quantity of migrated and flowed induced electrical charges +△Q in the permanent electrical field. Or, the induced electrical charge generator and the one-way communication conductor inside the power source of the induced electrical charge power source will jointly induce the equivalent quantity of migrated and flowed induced electrical charges +Q in the permanent electrical field. After the dynamically induced electrical charges migrate and move, the induced electromotive force power source and the induced electrical charge generator will be compensated instantly to form the equivalent quantity of the induced electrical charges. The migrated and flow electrical charges will supply the same quantity of induced electrical charge. To explain it, the induced electromotive force power source and the induced electrical charge generator will escape and emit the induced electrical charges -Q _{dynamically induced escape and emission} outside the power source. During the dynamic balance, the total quantity of the induced electrical charge Q _{total dynamically induced electrical charges equals} to the total induced charges +Q _{total dynamically induced electrical charges} during the static balance. The total induced charges Q _{total statically induced electrical charges}, i.e., Q _{total dynamically induced electrical charge escape and emission} =Q _{total dynamically induced electrical migration} =Q _{total statically induced electrical charge migration}. During the dynamic balance of the induced charges, the induced electromotive force power source and the induced electrical charge generator are able to export the electrical charges/ current and the electrical energy.

Features and role of the induced charge attractor: they are a pair of parallel metal plates that are able to store the positive electrical charges and the negative electrical charges respectively and are δ thick, or two metal conductors or any geometrical solids in "U" form, i.e., the positive electrode plate and negative electrode plate of the induced electrical charge attractor. A lead will be drawn out or not from the positive electrode plate and negative electrode plate for charging. After the charging, the electrical field of the attractor will be formed. The surrounding of the positive electrode plate and the negative electrode plate is filled by the insulating medium. The positive electrode plate 17 and negative electrode plate 15 of the induced charge attractor are placed at the external side of the subuliform, cuniform, or pinpointed end of the negative electrode plate and the external side of the subuliform, cuniform, or pinpointed end of the positive electrode plate of the induced electromotive force power source and the induced electrical charge 11, 12. They are d≥0 or d < 0 away from each other. Features and principles of the induced charge attractor: When the positive electrode plate and negative electrode plate of the induced charge attractor are filled by the positive electrical charges and the negative electrical charges, a pair of electrical fields of the attractor will be formed, which will impose a strong attraction force to the induced negative electrical charges and the induced positive electrical charges respectively, to attract the negative electrical charges on the negative electrode plate and the positive electrical charges on the positive electrode plate of the induced electromotive force power source and the induced electrical charge generator to the induced electrical charge receiver. The attractive electrical field intensity of the induced electrical charge attractor is E₃=K_{E3}·E₂. The attraction electromotive force of the induced electrical charge attractor is ε₃=Kε₃·ε₂.

Features and role of the induced electrical charge escape emitter: the cross-section of which is a rectangle, single-ended single-surface cuniform, taper, single-ended single-surface cuniform with the equivalent or unequivalent bevel, pin, single-ended double-surface taper with the equivalent or unequivalent gradient, double-ended double-surface cuniform, double-ended double-surface subuliform surface with the equivalent or unequivalent gradient, double-ended double-surface pin or any other random form. The induced electrical charge escape emitter is a pair of pointed metal conductor with the variable linearity, whose longitudinal section is a circle, rectangle, parallelogram, rhombus, or trapezium. In addition, they are communicated with and connected to, from the positive electrode plate, the negative electrode plate and other metal conductor, the positive electrode plate and the negative electrode plate of the induced electromotive force power source and the induced electrical charge generator by the lead and the switch. Or, they are integrated into one. Except parts on the positive electrode metal conductor and negative electrode metal conductor of the induced electrical charge escape emitter for receiving and emitting the positive electrical charges and the negative electrical charges, the remaining parts of the positive electrode metal conductor and negative electrode metal conductor are filled by the insulating medium. Except the parts for receiving and emitting the positive electrical charges and the negative electrical charges, all parts left of the positive electrode metal conductor and the negative electrode metal conductor of the induced electrical charge escape emitter shall be filled by the insulating medium. The induced electrical field intensity of the induced electrical charge escape emitter 7 is E₄=KE₄·E₃ and the induced electromotive force is ε₄=Kε₄·ε₃. Features and principle of the induced electrical charge escape emitter: when the pointed metal conductor with the variable section and linearity is filled by the electrical charges, under the effects of the tip effects and skin effects of the static electrical charges, as well as the effects of the metal conductor skin effects of the alternating current and the effects of the static electrical charge escape and emission at the tip, the positive electrical charges will automatically be escaped and emitted externally from the positive electrical charge metal conductor of the induced electrical charge emitter and the negative electrical charge will automatically be escaped and emitted externally from the negative electrode metal conductor of the induced electrical charge emitter. In other words, the induced electrical charge escape emitter is able to automatically escape and emit the induced charges externally and output the electrical charges /current and the electrical energy.

Features and role of the induced electrical charge receiver: a pair of metal conductor or metal conductor plate or metal conductor sphere that are able to receive respectively the positive electrical charges and the negative electrical charges, the cross-section of which is a rectangle, trapezium, triangle, parallelogram, or ellipse, or any geometrical body. A lead shall be connected and drawn or not from the positive electrode metal conductor and the negative electrode metal conductor of the induced electrical charge receiver respectively for output of the positive electrical charges and the negative electrical charges. The positive electrode metal conductor and the negative electrode metal conductor of the induced electrical charge receiver are connected by lead respectively to the output positive electrode and output negative electrode of the power generator for automatic escape and emission of electrical charges on the conductor with the variable section in the permanently induced electromagnetic field. Except the parts for receiving and exporting the positive electrical charges and the negative electrical charges, all parts left on the positive electrode metal conductor and the negative electrode metal conductor of the induced electrical charge receiver shall be filled by the insulating medium. The induced electrical field intensity of the induced electrical charge receiver is E'₄=K' E₄·E₄ and the induced electromotive force is ε'₄=K' ε₄·ε₄. The features and principle of the induced electrical charge receiver: once the positive electrode metal conductor and the negative electrode metal conductor of the induced electrical charge receiver receive the positive electrical charges and the negative electrical charges that are escaped and emitted respectively by the positive electrode metal conductor and the negative electrode metal conductor of the induced electrical charge escape emitter, the induced electrical field intensity E''₄=K'' E₄·E₄ will be generated for the induced electrical field and the induced electromotive forceε'₄=K_{'} ε₄·ε₄ will be generated as well. At the same time, it is able to export the positive electrical charges and the negative electrical charges out from the power source, the electrical energy in other words.

Features and role of the induced electrical charge accelerator: they are a pair of parallel metal conductor plates that are able to store the positive electrical charges and the negative electrical charges respectively and are δ≥0 thick. A lead will be drawn from the positive electrode plate and the negative electrode plate respectively for charging. Following the charging, the electrical field for acceleration will be formed. The surrounding of the positive electrode plate and the negative electrode plate is filled by the insulating medium. The central axes of the positive electrode plate and the negative electrode plate of the induced electrical charge accelerator for accelerating the positive electrical charges go parallel to each other and superpose. Besides, they go parallel to and superpose or not the central axes of the positive electrode plate and the negative electrode plate of the induced electrical charge accelerator for emitting the induced positive electrical charges. The subuliform tip end of the positive electrode metal conductor of the induced electrical charge escape emitter is d≥-c away from the junction point of the positive electrode plate plane of the induced electrical charge accelerator facing the negative electrode plate and the central axis. The positive electrode plate of the induced electrical charge accelerator is insulated or not from the positive electrode plate metal conductor of the induced electrical charge escape emitter.

Features and role of the induced electrical charge accelerator: after the positive electrode plate and the negative electrode plate of the induced electrical charge accelerator is charged, the electrical field for acceleration will be formed between the two parallel electrode plates of the induced charge accelerator and the intensity of the electrical field is E₅=E _{attraction}=K_{E5}.E₄. The electromotive force generated is ε₅=Kε₅. ε₄. As the positive electrical charges and the negative electrical charges emitted by the induced electrical charge escape emitter are concerned, the electrical field for acceleration generated by the induced electrical charge accelerator is a positive acceleration electrical field conducive to the increase the electrical energy escaped and emitted by the induced electrical charges.

The automatic-control regulating shield comprises of the static screening net, screening net coupling and securing stand and the automatic static screening regulator and controller. The static screening net is a wire mesh or metal plate. It is coupled and secured by the screening coupling stand and is parallel to the parallel plates of the permanent electrical field. It is designed with the randomly plugged-in / drawn-out slide structure. Driven by the automatic static screening and regulator controller, it will be plugged in and drawn out by certain vibration frequency f≥0 from the long seam between the permanent electrical field on the end other than electrical charge output and the induced electrical charge generator and the seam width is b≥0. The plug-in depth t≥0 and the plug-in and drawn-out vibration frequency f≥0 can be adjusted manually or automatically. The role of the automatic-control regulating shield is to change the electrically induced area of the permanent electrical field for the induced electrical charge generator, so as to change the magnitude of the electrically induction of the permanent electrical field for the induced electrical charge generator and gain the change of magnitude of the quantity of the induced electrical charges that change periodically on the induced electrical charge generator. The intensity of the induced electrical field is △E' ₆=E₆=K_{E6}·E₀, ε₆=△ε' ₆=Kε₆·E₀. The coupling and securing stand of the screening net is fixed and coupled in the way it is aligned to and superposes the center of the permanent magnetic piston of the automatic static screening regulator and controller. The principle of the automatic-control regulating shield: driven by the automatic static screening regulator and controller that vibrates by certain frequency f≥0 and certain vibration amplitude B ≥0, the static screening net synchronously is reciprocally plugged in / drawn out by certain frequency f≥0 and certain vibration amplitude B ≥0 between the permanent electrical field and the induced electrical charge generator. For the areas in the permanent electrical field where the induced electrical charges have been induced, it will carry out the consecutive and variable static screening in the way of screening factor, to promote the induced electrical charge generator to generate the induced electrical charges that can be escaped and emitted.

Automatic static screening regulator and controller comprises of the electromagnetic core coil, the permanent magnet piston, vibration spring, piston cylinder, piston rod, and the piston cylinder securing socket. The electromagnetic core coil is installed on one end of the permanent magnetic piston and the vibration distance for the vibration amplitude is reserved in advance. When the coil is connected to the output positive electrode and the output negative electrode of the power source, the electromagnetic field generated will generate the magnetic repulsion that is reverse to the magnetic field generated by the permanent magnetic piston of the homopolarity. The other end of the permanent magnet piston is installed with a piston rod, on which a vibrative spring is set. The free end of the piston rod is secured, coupled or integrated into one with the power source once-only starter. The permanent magnet piston is plugged in and installed on the piston cylinder and may slide and vibrate freely. The piston cylinder is secured on the machine body through a socket. Features and principle of the automatic static screening regulator and controller: after the once-only starter is pressed down, the piston rod will drive the piston cylinder to compress the vibrative spring and generate the pre-stressed elasticity of the spring, which makes the permanent magnet guide the static screening net to be plugged in the gap between the permanent electrical field and the induced charge generator of the induced electrical field on the one hand. The greater is the elasticity, the deeper is it plugged. The action area and the effects of the static screening change constantly and ceaselessly along with the continuous and constant change of the plug-in depth △h of the static screening net. △E'₆ = E₆ = K'_{E6}·E. The induced electrical charge density in the induced electrical charge generator and the insulating medium are changed constantly to produce the electrical intensity E'₆ = K'_{E6}·E and the electromotive force ε₆ = K'ε₆·ε of the automatically controlled static controller; on the other hand, under the effects of the elasticity when the vibrative spring is compressed, the permanent magnet piston will vibrate towards the approaching electromagnetic core coil. The electromagnetic repulsion increases constantly and the elasticity decreases constantly until the electromagnetic repulsion outweighs the elasticity of the spring and pushes the permanent magnet piston to vibrate towards the reverse direction, the direction departing from the electromagnetic core coil. The permanent magnet piston that vibrates circularly and reciprocally in this way will drive the static screening net to be plugged in / drawn out constantly and reciprocally in the gap between the permanent electrical field and the induced charge generator of the induced electrical field to change the static screening factor and the insulating medium of the electrically induced area of the permanent electrical field.

Power source current manpower-automatic regulator, the manpower-automatic regulator for clearance δ≥0 between the induced electrical charge escape emitter and induced electrical charge receiver comprises of the regulating and securing socket of the induced electrical charge receiver, regulating handwheel for the regulating bolt for gapδ≥0 between the induced electrical charge receiver and the induced electrical charge escape emitter. The induced electrical charge receiver and the middle part of the securing socket are used to couple and secure the induced electrical charge receiver. The two ends of the socket are connected slideably to the machine body. The middle part of the regulating bolt stands in the screw thread hole on the machine body end through the screw thread. One end of the regulating screw is coupled with the securing socket of the induced electrical charge receiver rotatablely and the other end of the regulating screw is coupled with and connected to the handwheel of the regulating bolt. The principle of the power source current manpower-automatic regulator: when the handwheel is regulated reelingly, the regulating bolt is screwed in / out. The securing and regulating socket is used to drive the induced electrical charge receiver to approach or depart from the induced electrical charge escape emitter, to increase or decrease the clearanceδ(δ≥0) between the induced electrical charge escape emitter and the induced electrical charge receiver and regulate and change the quantity of the induced electrical charges escaped and emitted by the induced electrical charge escape emitter and the quantity of the electrical charges received by the induced electrical charge receiver, adjust the magnitude of the power source current in other words.

Features and role of the power source output voltage regulator: it comprises of the potentiometer, i.e, the adjustable resistance voltmeter and ammeter. The potentiometer is connected in series on the positive electrode circuit and the negative electrode circuit inside the power source. The voltmeter is connected through parallel connection between the positive electrode and negative electrode inside the power source. Features and principle of the power source output voltage regulator are to change the voltage drop of the adjustable resistance by adjusting the value of the adjustable resistance, so as to adjust magnitude of the output voltage of the power source.

Features and role of the once-only button starter of the power source: it comprises of the button head and the button rod. The button rod is coupled to or integrated with the piston rod of the static shield. Features and principle of the once-only button starter of the power source: when the once-only starter button is pressed, the vibration spring of the static shield is compressed and the vibration force source for vibration of the static shield is produced, which changes the electromagnetic screening of the induced electrical charge area and the electrically induced area of the permanent electrical field when the induced electrical charge density of the induced electrical charge generator in the induced electrical field is changed or not.

The general power source boundary member of the environmental friendly permanent-operating power source generator of the power source output switch circuit comprises of the switch and the safe. It is compound geometrical solid whose cross-section is the same to that of the induced electromotive force power source and the induced electrical charge generator. The end and section compensate the adjustable gap d≥0. It is free from the skew opening and will not escape and emit the electrical charges. One end of the switch is connected in series to the safe. The other end of the switch is connected to the electrical energy output end of the induced electromotive force power source and the induced electrical charge generator. The other end of the safe is connected to the big end of the induced electrical charge escape emitter. It is designed based upon the principle that the switch will generally control the connection and breakage of the general power source circuit. When the external load circuit overloads or short circuit happens, the safe will provide the overload protection and short circuit protection to the power source.

Features and role of the permanent electrical field charger: the permanent electrical field charger comprises of the button switch, charger' battery, safe, voltage regulating resistance, voltmeter and ammeter. The button switch, charger's battery, safe, voltage regulating resistance and ammeter are connected in series in turn. At last, they are connected through parallel connection to the voltmeter. The positive output electrode and negative output electrode are communicated with, connected to the positive electrode and negative electrode of the permanent electrical field for charging. Features and principle of the permanent electrical field charger: when button switch is connected to adjust voltage regulating resistance, the permanent electrical field charger will instantly charge the positive electrical charges and the negative electrical charges at the rated voltage to form the permanent electrical field. Thus, the induced charge generator of the induced electrical field of the permanent electrical field will produce permanently the induced charges to ensure that the power source will be constant and ceaseless, exporting the electrical energy permanently.

Features and role of the permanently -operating amplification charger of the permanent electrical field: it comprises of the chargeable environment friendly permanent-operating power source, chargeable capacitor, chargeable photocell, chargeable battery charged by friction, escape emitter for charged positive electrical charges fed back by chargeable power source towards chargeable capacitor, positive electrical charge receiver for feedback charge from chargeable power source towards the chargeable capacitor, negative electrical charge receiver for feedback charging from the chargeable power source towards the chargeable capacitor, chargeable voltmeter of the permanent electrical field, power cut-off switch of the permanently-operating power source-permanently-operating power source permanent electrical field power cut-off- discharge switch, positive electrode and negative electrode two-wire chargeable switch of the permanently-operating power source permanent electrical field, output voltmeter of the chargeable environment friendly permanent-operating power source, output regulation compensation load of the chargeable environment friendly permanent-operating power source, the positive electrode and negative electrode two-wire switch for feedback charging by chargeable environment friendly permanent-operating power source towards the chargeable capacitor, the positive electrode and negative electrode two-wire switch for feedback charging from the chargeable capacitor towards the chargeable power source permanent electrical field, voltmeter of the chargeable capacitor, chargeable environment friendly permanent-operating power source permanent electrical field power cut-off - discharge switch, two-wire switch of the positive electrode and negative electrode of the chargeable photocell, chargeable photocell voltmeter, chargeable photocell ammeter and the connecting wire. The chargeable environmental friendly permanently-operating power source comprises of the chargeable environment friendly permanent-operating power source positive electrode plate of the permanent electrical field, chargeable environment friendly permanent-operating power source permanent electrical field negative electrode plate, chargeable power source positive electrode plate of the induced charge generator, chargeable power source induced charge generator negative electrode plate, chargeable power source induced electrical charge generator in the shape of single / double-end equivalent or unequivalent gradient double / single - subuliform or any other geometrical solid - positive electrode plate and negative electrode plate of the induced electrical charge escape emitter, the positive electrode plate of induced electrical charge receiver, the negative electrode plate of the induced electrical charge receiver and the insulating medium. The positive electrode plate and the negative electrode plate of the chargeable photocell are connected by lead respectively through parallel connection to the chargeable photocell voltmeter, which in turn is connected respectively to the positive electrode and the negative electrode of the chargeable photocell ammeter and two-wire switch for the positive electrode and negative electrode of the chargeable photocell. In addition, they are connected in series to the positive electrode and negative electrode of the chargeable capacitor. The positive / negative electrode two-wire switch of the chargeable photocell is installed on the internal side of the machine body or machine cover of the permanently-operating power source. Knob of the two-wire switch handle comes out from the machine body of the permanent power source. After the positive electrode plate and negative electrode plate of the induced electrical charge receiver of the chargeable environmental friendly permanently-operating power source are connected through parallel connection to the output voltmeter of the chargeable environmental friendly permanently-operating power source and the chargeable environmental friendly permanently-operating power source output adjustment and compensation load, it is in turn connected respectively through lead to the positive electrode plate and negative electrode plate of the positive / negative two-wire switch of the permanent electrical field of the permanently-operating power source and is connected to the positive electrode and negative electrode of the permanent electrical field of the permanently-operating power source. The positive / negative electrode two-wire chargeable switch of the permanent electrical field of the permanently-operating power source is installed on the internal side of the machine body or machine cover of the permanently-operating power source. Press button of the handle of the two-wire switch comes out from the machine body of the permanently-operating power source. The positive electrode plate and negative electrode plate of the induced electrical charge receiver of the permanently-operating power source are connected respectively through the connecting lead to the positive electrode and negative electrode of the positive / negative electrode two-wire switch for feedback charging from the chargeable capacitor to the permanently-operating power source, the charged positive electrical charge escape emitter for feedback charging from the chargeable permanently-operating power source to the chargeable capacitor, the charged negative electrical charge escape emitter for feedback charging from the chargeable permanently-operating power source to the chargeable capacitor, the positive electrode and negative electrode of the chargeable capacitor. The connecting lead between the induced electrical charge escape emitter and the induced electrical charge receiver shall be taken out. The clearance δ≥0 is adjustable. The central axis of the induced electrical charge escape emitter shall go parallel with or superpose the central axis of the induced electrical charge receiver. The cross section of the fed back charged charge escape emitter is a dual-subuliform surface with the equivalent gradient, taper or cuniform or pinpoint, cylinder, or pyramid or pinpoint metal conductor or any other geometrical solid. The cross section of the fed back charged charge receiver is circular sphere metal conductor, a rectangular cuboid metal conductor, or any other geometrical solid. The power cutoff switch of the permanently-operating power source, i.e., the positive electrode and negative electrode of the power cutoff / discharge switch of the permanent electrical field of the permanently-operating power source are connected respectively to the positive electrode and negative electrode of the permanent electrical field of the permanently-operating power source. The power cutoff / discharge switch of the permanent electrical field of the permanently-operating power source is installed on the machine body of the permanently-operating power source or the internal side of the machine body cover. Knob of the switch handle shows up outside the machine body of the permanently-operating power source. The positive electrode and negative electrode of the power cutoff / discharge switch of the permanent electrical field of the chargeable environment friendly permanent-operating power source are connected respectively to the positive electrode plate and the negative electrode plate of the permanent electrical field of the chargeable environment friendly permanent-operating power source. The power cutoff / discharge switch of the permanent electrical field of the chargeable environment friendly permanent-operating power source is installed on the machine body or the internal side of the machine body of the permanently-operating power source. Knob of the switch handle shows up outside the machine body of the permanently-operating power source. The permanently-operating amplification charger of the permanent electrical field is installed inside the machine body of the power source. Feature and principle of the permanently-operating power source permanently-operating amplification charger: as the chargeable capacitor stores the positive electrical charges and negative electrical charges, or when the common lights and sun's rays irradiate the chargeable photocell, the chargeable photocell will produce the positive electrical charges and negative electrical charges. When the two-wire switch of the chargeable photocell is connected, the chargeable photocell will charge the chargeable electrical capacitor. When the two-wire charging switch of the chargeable capacitor is connected, both the chargeable photocell and the chargeable capacitor are able to charge the chargeable environment friendly permanent-operating power source and the permanent electrical field, to charge the positive electrical charges and negative electrical charges in other words, forming the permanent electrical field of the chargeable environment friendly permanent-operating power source. Being induced by the permanent electrical field, the induced charge generator of the chargeable environment friendly permanent-operating power source will induce the induced positive electrical charges and the induced negative electrical charges. The induced electrical charge receiver of the chargeable environment friendly permanent-operating power source will receive the induced positive electrical charges and the induced negative electrical charges and produce the induced electromotive force ε_{chargeable power source} =K_{εlamp house}·ε_{lamp house} of the permanently-operating power source and the induced electrical field E _{chargeable power source} = K_{E chargeable power source} ·E _{chargeable power source}. The chargeable environment friendly permanent-operating power source is able to export the charges / current and electrical energy outside the chargeable power source. When the two-wire charging switch of the permanent electrical field of the permanently-operating power source is connected, the chargeable environment friendly permanent-operating power source will continuously and constantly charge by amplification the positive electrode plate of the permanent electrical field and negative electrode plate of the permanently-operating power source to import the positive electrical charges and negative electrical charges respectively, to form the permanent electrical field of the permanently-operating power source. When the chargeable environment friendly permanent-operating power source is connected to charge the feedback two-wire charging switch of the chargeable electrical capacitor, the positive electrode and negative electrode of the chargeable environment friendly permanent-operating power source will export the positive electrical charges and the negative electrical charges to the charged electrical charge escape emitter feeding back the positive electrical charges and the charged electrical charge escape emitter feeding back the negative electrical charges respectively. The charged electrical charge escape emitter feeding back the positive electrical charges and the charged electrical charge escape emitter feeding back the negative electrical charges will escape and emit the positive electrical charges and the negative electrical charges to the feedback charging positive charge receiver and the feedback charge negative charge receiver respectively. The positive electrical charge receiver for feedback charging and the negative electrical charge receiver for feedback charging will charge the positive electrical charges and the negative electrical charges to the positive electrode plate and negative electrode plate of the chargeable electrical capacitor respectively.

The power cutoff / discharge device of the environment friendly permanently-operating power source comprises of the power cutoff / discharge device of the permanent electrical field of the environment friendly permanently-operating power source and the power cutoff / discharge device of the chargeable environment friendly permanent-operating power source permanent electrical field. The power cutoff / discharge device of the permanent electrical field of the environment friendly permanently-operating power source comprises of the power cutoff / discharge device of the permanent electrical field of the environment friendly permanently-operating power source and the connecting lead. The positive electrode and negative electrode of the power cutoff / discharge device of the permanent electrical field of the environment friendly permanently-operating power source are connected respectively through the connecting lead to the positive electrode plate and negative electrode plate of the permanent electrical field of the environment friendly permanently-operating power source. The power cutoff / discharge device of the permanent electrical field of the chargeable environment friendly permanently-operating power source comprises of the power cutoff / charge switch of the permanent electrical field of the chargeable environment friendly permanent-operating power source and the connecting lead. The positive electrode and negative electrode of the power cutoff / discharge device of the permanent electrical field of the chargeable environment friendly permanent-operating power source are connected respectively through lead and are connected respectively to the positive electrode plate and negative electrode plate of the permanent electrical field of the chargeable environment friendly permanent-operating power source. Principle: when the power cutoff / discharge device of the permanent electrical field of the chargeable environment friendly permanent-operating power source is connected, both the induction electromotive force and the induced electromotive force of the chargeable environment friendly permanent-operating power source are zero, ε_{chargeable power source induction} = 0, and ε _{chargeable power source induction} = 0. There is no electrical charge in the chargeable environment friendly permanent-operating power source and no electrical energy is exported outside. The power of the chargeable environment friendly permanent-operating power source is cut off. When power cutoff / discharge device of the permanent electrical field of the chargeable environment friendly permanent-operating power source is connected, the electrical field intensity of the permanent electrical field of the environment friendly permanent-operating power source E _{permanently-operating power source} = 0, the electromotive force of the permanent electrical field ε_{permanently-operating} power _{source}=0. The induced electrical field intensity of the environment friendly permanent-operating power source E _{permanently-operating power source induction} = 0, and the induced electromotive force ε_{permanently-operating power source induction} = 0. The induced electromotive force of the environment friendly permanent-operating power sourceε_{permanently-operating power source induction} = 0. The induced electrical field intensity ε_{permanently-operating power source induction} = 0. In other words, the power of power generator of the environment friendly permanent-operating power source is cut off and there is no electrical energy output.

Feature and role of the attractor charger: it comprises of the button switch, charger's battery, safe, voltage regulating resistance, voltmeter and ammeter. The button switch, charger's battery, safe, voltage regulating resistance and ammeter are connected in series in turn and they are connected through parallel connection to the voltmeter in the last to export the positive electrical charges and the negative electrical charges. They can be connected respectively to the positive electrode plate and negative electrode plate of the attractor. Or the chargeable capacitor of the permanently amplification charger of the permanent electrical field might be connected to the connecting lead. Then, they will be connected respectively to the positive electrode plate and the negative electrode plate of the attractor for charging through the chargeable switch of the attractor. Feature and principle of the attractor charger: when the button switch is connected to regulate the voltage regulating resistance, the attractor charger will charge the positive electrical charges and negative electrical charges at the rated voltage to the positive electrode plate and the negative electrode plate of the attractor instantaneously to form the electrical field of the attractor.

Feature and role of the accelerator charger: it comprises of the button switch, charger's battery, safe, voltage regulating resistance, voltmeter and ammeter. The button switch, charger's battery, safe, voltage regulating resistance and ammeter are connected in series in turn. At last, they are connected through parallel connection to the voltmeter. The positive output electrode and negative output electrode may be connected respectively to the positive electrode plate and the negative electrode plate of the accelerator for charging. Or, the chargeable electrical capacitor of the permanent electrical field may be connected by a connecting lead, which, may be connected respectively through the chargeable switch of the accelerator, to the positive electrode plate and negative electrode plate of the accelerator for charging. Feature and principle of the accelerator charger: when the button switch is connected to regulate the voltage regulating resistance, the accelerator charger will instantaneously charge the positive electrical charges and the negative electrical charges at the rated voltage to the positive electrode plate and the negative electrode plate of the accelerator to form the electrical field for acceleration.

The cross section of the machine body is a circular cylinder, a rectangular cuboid, elliptic cylinder, circular sphere, or any other geometrical solid with any random cross section. It is made by metal material completely or incompletely, or it is made by non-metal material in whole or in part. All components and parts of this invention are installed inside the machine body of the power source. The diameter of the ten wire posts A, B, C, D, E, F, G, H, I and J of the permanently-operating power source is d≥0 respectively. One end of the wire posts is hidden in or shows up outside the machine body of the power source or the external side of the machine body cover. The machine body is designed to protect and install the power source.

Feature and role of the power source loads: one end of the load switch is connected to the positive output electrode of the power generator of this invention and the other end is connected in series to the load safe. Then, they will be connected in turn in series to the voltage regulator and the load. The other end is connected to the negative electrode load of the power generator of this invention. Feature and role: when the load switch is connected, the load gains the electrical energy to work.

Raw materials used in this invention and the metal for the electrified conductors might be any random copper, aluminum, copper alloy, aluminum alloy, steel and iron, steel alloy or any other metals. Any other metal alloy and semiconductor may be manufactured by any silicon, germanium, or any other semiconductor material. The nonmetal materials may be the mica, isolated rubber, isolated plastic, isolated backlite, or any other nonmetal materials. The electrical components and parts may be any electrical components and parts meeting the corresponding technical / performance parameters, technical functions and technical demands.

## Claims

1. A power generator for automatic escape and emission of charges on conductor with the variable cross-section in the permanently induced electromagnetic field, which comprises of twenty-nine major parts, namely, permanent electromagnetic field, generator of induced electromagnetic charges in the induced electromagnetic field, one-way communication conductor inside the power source of induced electromagnetic charges, induced electromagnetic force source and induced electromagnetic charge generator, induced electromagnetic charge attractor, induced electromagnetic charge escape emitter, induced electromagnetic charge receiver, induced electromagnetic charge emission accelerator, automatic control / regulating static electromagnetism shield, automatic controller for static electromagnetism shielding / regulating, manpower automatic control regulator for current from the electromagnetic source, electromagnetic source output voltage pressurizing regulator, electromagnetic source once-only starter, power source output switch circuit, permanent electromagnetic field permanent amplifying charger, attractor charger, accelerator charger, machine body, excitation power generation / charging friction power generation or light-powered battery, chargeable environment friendly permanent-operating power source, charged charge escape emitter, charged charge receiver, charging capacitor charging / power cutting / power generating switch circuit, charging/ generating voltage transforming / pressurizing control circuit, charging / power generation / storage feedback circuit, charging / generating current / electric work control regulator circuit, charge internal load voltage regulating circuit, and charge amplifier; and **characterized in that**, the generator of induced electromagnetic charges is located inside the permanent electromagnetic field, in the clearance between the permanent electromagnetic field and the generator of induced electromagnetic charges is an automatic control / regulating static electromagnetism shield device and static electromagnetism shield screen that shuttles in a sliding manner at certain vibrating frequency of f≥o, the one-way communication conductor inside the induced electromagnetic charges electromagnetic source is installed inside the generator of induced electromagnetic charges, the induced electromagnetic charge output of the generator of induced electromagnetic charges is conductively connected or integrated with the induced electromotive power source and induced electromagnetic charge generator; the induced electromagnetic charge absorber is mounted on the output end of the induced electromagnetic force electromagnetic source and induced electromagnetic charge generator, the output end of the induced electromotive power source and induced electromagnetic charge generator is connected with the induced electromagnetic charge escape emitter, the tip of the induced electromagnetic charge escape emitter is aligned or disaligned with the center of the induced electromagnetic charge receiver, and the induced electromagnetic charge emission accelerator is mounted in its center or outside, one end of the manual / automatic power voltage regulator is connected with the induced electromagnetic charge receiver, and the other end is connected with the positive or negative electrode of the power source; the manual / automatic power current regulator is connected with the induced charge receiver, the one-time starter of power source is connected with the permanent electromagnetic field, the positive and negative electrodes of the power source output switch circuit are connected with the positive and negative electrodes of the power source respectively, the permanent electromagnetic field charger is connected with the permanent electromagnetic field, the attractor charger is connected with the absorber, the accelerator charger is connected with the accelerator, the charging-by-friction solar battery is connected with the charging capacitor, while the charging capacitor is connected with the chargeable environment friendly permanent-operating power source, the chargeable environment friendly permanent-operating power source is connected with the permanent electromagnetic field, the charging / power generation switch circuit is connected with the chargeable environment friendly permanent-operating power source, the power cut / generation switch circuit is connected with the chargeable environment friendly permanent-operating power source, the charging / power generation voltage regulator circuit is connected with the environmentally friendly charging power source, the charging / power generation / storage feedback circuit is connected with the charging capacitor, the charging / power generation current and current regulator circuit is connected with the chargeable environment friendly permanent-operating power source, the internal load and voltage regulation circuit of the charger are connected with the chargeable environment friendly permanent-operating power source, the charge amplifier is connected with the chargeable environment friendly permanent-operating power source, the power source is integrally installed inside the machine body; the charge escape / emission power generator of the permanently induced electromagnetic field conductor with variable cross-section provides the overall **characterized in that**: the first is that the inventive creation and scientific discovery use the permanent electrical field, the second is that the invention uses the induced electromagnetic field of the permanent electrical field, the third is that the invention uses the principle that the permanent electromagnetic field separates the positive and negative induced charges after the metal conductor inside the permanent electrical field, i.e., the one-way communication conductor inside the induced charge generator and induced charge power source, generates the electromagnetic induction, the fourth is that the invention, creation and scientific discovery use the principle that charges are escaped and emitted from the tip of the metal conductor of variable cross section, variable linearity, conic shape, single or double heads, single or double slants, different or equal pitch in the permanent electromagnetic field, i.e., the tip of the induced electromotive power source and induced electrical charge power generator, as well as the induced electrical charge escape emitter, the fifth is that the invention, creation and scientific discovery use the rechargeable photoelectric or battery of charging by friction, charging capacitor, chargeable environment friendly permanent-operating power source, and permanent amplification charger of permanent power source and permanent electrical field that comprises of the charging switch and power cut switch, to ensure that the permanent power source continuously and permanently outputs the induced electrical charge and electric energy.

2. A power generator for automatic escape and emission of charges on conductor with the variable cross-section in the permanently induced electromagnetic field according to Claim 1, **characterized in that**: the permanently induced electromagnetic field of the power generator for automatic escape and emission of charges on conductor with the variable cross-section comprises of a pair of paralleled metal conductor plates that respectively store the positive and negative charges are δ≧0 thick with an interval of d≧0, i.e., parallel plate capacitor or a pair of geometric solids or composite geometric solids of any shape with an interval of d≧0; the cross section or longitudinal section or both cross section and longitudinal section of the positive electrode plate of the permanent electrical field and the negative electrode plate are rectangular or square or trapeziform or triangular or polygonal with curved side lines or blended curve surface with a tip of geometric structure, or circular, or elliptic, or geometric solid combining several geometric shapes, or any other geometric solid, with its center or any part designed and fabricated / non-fabricated into any geometric conductor which is rectangular or trapeziform or triangular or arc or elliptic or any other geometric shape with a cubage of V≧0; it may as well be an arced rectangular, □-shaped or right-angle cross section, with the space around the two paralleled plates filled with insulating medium, and the positive electrode and negative electrode plate respectively lead or don't lead a charging and discharging connector or conductor wire; the paralleled metal plates of the positive and negative electrodes of the permanent electrical field and all paralleled metal electrode plates of this invention as well as the insulating medium between them shall be altogether made into a cylinder, or concentric cylinder whose quantity of coil or layer is i≥0, or made into a piled columniform, cuboid, elliptical cylinder, or any other geometrical solid, or any compound geometrical solid, or the geometrical solid or any other geometrical solid whose longitudinal section, or longitudinal section and cross section is the rectangle, square, trapezium, triangle, curve polygon, hybrid curve and surface with the tipped geometrical structure, elliptical form, geometrical solid compounded by several geometrical forms, or any other geometrical solids, the quantity of coil or layer of which shall be i≥0. They shall be made into the geometrical conductor, in the middle or any part of it, a rectangle, trapezium, triangle, arc, ellipse, any other geometrical form, or any other geometrical solid with the cubage of V≧0 slot shall be designed or made; the permanent electrical field is integrally fixed inside the machine body, and the positive electrode plate and negative electrode plate of the permanent electrical field are respectively connected through conductor wire with the positive and the negative electrode charging connectors of the permanent electrical field; the positive and negative charging electrode wire conductors are respectively connected through the positive and negative charging electrode coupled switch with the positive and negative output electrodes of the chargeable environment friendly permanent-operating power source, or simultaneously, the positive and negative charging electrode wire conductors of the charging capacitor are respectively connected through the positive and negative charging electrode coupled switch of the permanent electrical field of the environmentally friendly charging power source with the positive and negative electrodes of the charging capacitor; then, it is connected through wire conductors with rechargeable battery coupled switch and photoelectric batter or battery of charging by friction; the positive and negative electrodes of the permanent electrical field are connected through the wire conductors of the positive and negative electrodes coupled charging switch and capacitor; eventually, through the positive electrode feedback induced electrical charge receiver, negative electrode feedback induced electrical charge receiver, positive electrode feedback induced electrical charge escape emitter, negative electrode feedback induced electrical charge escape emitter and feedback coupled charging switch, it is respectively connected with the positive and negative output electrodes of power generator for automatic escape and emission of charges on conductor with the variable cross-section in the permanently induced electromagnetic field.

3. A power generator for automatic escape and emission of charges on conductor with the variable cross-section in the permanently induced electromagnetic field according to Claim 1, **characterized in that**: the induced field charge generator of the power generator for automatic escape and emission of charges on conductor with the variable cross-section in the permanently induced electromagnetic field is located inside the permanent electrical field, providing the ability to separate the positive and negative induced charges under the induction of permanent electrical field, and comprises of a pair of paralleled or non-paralleled metal conduction plates or geometric solids with the thickness of δ≥0 and interval of d≥0, which are respectively paralleled or non-paralleled with the positive and negative electrode plates of the permanent electrical field; the cross section or longitudinal section or both cross section and longitudinal section of the positive and negative electrode plates of the induced charge generator of the induced electromagnetic field are rectangular or square or trapeziform or triangular or polygonal with curved side lines or blended curve surface with a tip of geometric structure, or circular, or elliptic, or geometric solid combining several geometric shapes, or any other geometric solid, with its center or any part designed and fabricated / non-fabricated into any geometric conductor which is rectangular or trapeziform or triangular or arc or elliptic or any other geometric shape with a cubage of V≧0; it may as well be an arced rectangular, □-shaped or right-angle cross section, with the space around the two paralleled plates filled with insulating medium, and the positive electrode and negative electrode plate respectively lead or don't lead a charging and discharging connector or conductor wire; the paralleled metal plates of the positive and negative electrodes of the permanent electrical field and all paralleled metal electrode plates of this invention as well as the insulating medium between them shall be altogether made into a cylinder, or concentric cylinder whose quantity of coil or layer is i≥0, or made into a piled columniform, cuboid, elliptical cylinder, or any other geometrical solid, or any compound geometrical solid, or the geometrical solid or any other geometrical solid whose longitudinal section, or longitudinal section and cross section is the rectangle, square, trapezium, triangle, curve polygon, hybrid curve and surface with the tipped geometrical structure, elliptical form, geometrical solid compounded by several geometrical forms, or any other geometrical solids, the quantity of coil or layer of which shall be i≥0, they shall be made into the geometrical conductor, in the middle or any part of it, a rectangle, trapezium, triangle, arc, ellipse, any other geometrical form, or any other geometrical solid with the cubage of V≧0 slot shall be designed or made; the surrounding space of the two paralleled electrode plates are filled with insulating medium, and the positive and negative electrode plates are paralleled with an interval of d≥0, and i≥0 one-way communication diodes connected in the two-way or one-way manner with the positive and negative electrode plates with an interval of d≥0 between them forwardly or reversely in the E₀ direction of permanent electrical field; the length or width or thickness of the positive and negative electrode plates of the induced charge generator of induced electric field had better be smaller, bigger or equal to those of the positive and negative electrode plates of the permanent electrical field; the positive and negative electrode plates of the induced charge generator of the induced electric field, on both ends or one end along the length or width direction, go parallel to and superpose or don't go parallel to and superpose respectively the positive electrode plate and negative electrode plate of the induced electromotive force power source and the induced electrical the induced electrical charge generator, they are communicated with and connected to each other, or are made into one, or the internal plane of the positive electrode plate and negative electrode plate of the induced electrical charge generator of the induced electrical field and the internal plane of the positive electrode plate and negative electrode plate of the induced electromotive force power source and the induced electrical charge generator are respectively communicated with or connected closely to the external side of the positive electrode plate and negative electrode plate of the one-way communication conductor inside the power source of the induced electrical charges, or they are integrated into one body.

4. A power generator for automatic escape and emission of charges on conductor with the variable cross-section in the permanently induced electromagnetic field according to Claim 1, **characterized in that**: the one-way communication conductor inside the induced charge power source of the power generator for automatic escape and emission of charges on conductor with the variable cross-section in the permanently induced electromagnetic field comprises of a pair of paralleled metal conductor plates or any geometric solids inside the induced charge generator in the induced electric field, which are δ≧0 thick with an interval of d≧0; the cross section or longitudinal section or both cross section and longitudinal section of the positive electrode plate of the permanent electrical field and the negative electrode plate are rectangular or square or trapeziform or triangular or polygonal with curved side lines or blended curve surface with a tip of geometric structure, or circular, or elliptic, or geometric solid combining several geometric shapes, or any other geometric solid, with its center or any part designed and fabricated / non-fabricated into any geometric conductor which is rectangular or trapeziform or triangular or arc or elliptic or any other geometric shape with a cubage of V≧0; it may as well be an arced rectangular, □-shaped or right-angle cross section, with the space around the two paralleled plates filled with insulating medium, and the positive electrode and negative electrode plate respectively lead or don't lead a charging and discharging connector or conductor wire; the paralleled metal plates of the positive and negative electrodes of the permanent electrical field and all paralleled metal electrode plates of this invention as well as the insulating medium between them shall be altogether made into a cylinder, or concentric cylinder whose quantity of coil or layer is i≥0, or made into a piled columniform, cuboid, elliptical cylinder, or any other geometrical solid, or any compound geometrical solid, or the geometrical solid or any other geometrical solid whose longitudinal section, or longitudinal section and cross section is the rectangle, square, trapezium, triangle, curve polygon, hybrid curve and surface with the tipped geometrical structure, elliptical form, geometrical solid compounded by several geometrical forms, or any other geometrical solids, the quantity of coil or layer of which shall be i≥0, they shall be made into the geometrical conductor, in the middle or any part of it, a rectangle, trapezium, triangle, arc, ellipse, any other geometrical form, or any other geometrical solid with the cubage of V≧0 slot shall be designed or made; the cross section is rectangular or trapeziform, with a thickness of δ≥0, and comprises of a pair of paralleled or non-paralleled semi-conductor plates that are paralleled, equal-width and equal-length with the positive and negative electrode plates of the permanent electrical field, or paralleled but non-equal-width and non-qual-length, or non-paralleled, non-equal-width and non-equal-length with them, sharing or not sharing the same thickness; alternatively, it may comprises of i≥0 semiconductor diodes or single-way or dual-way conductive materials; the positive and negative electrode plates of the one-way communication conductor inside the induced charge power source are connected or fabricated into one piece with a relative plane distance d≥0 or close contact, and wire conductors are used to connect the positive electrode plate, semiconductor diode, and negative electrode plate in the single-way manner; both the positive and negative electrode plates are filled with insulating medium; the external planes of both the positive and negative electrode plates of the one-way communication conductor inside the induced charge power source are respectively connected with the internal planes of the positive and negative electrode plates of the induced charge generator, or they may be fabricated into one piece.

5. A power generator for automatic escape and emission of charges on conductor with the variable cross-section in the permanently induced electromagnetic field according to Claim 1, **characterized in that**: the induced electromotive power source and induced electrical charge generator of the automatic charge escape and emission power generator of the permanently induced electromagnetic field conductor with variable cross-section are located inside the permanent electrical field, providing the ability to separate the positive and negative induced charges under the induction of permanent electrical field, and comprise of a pair of paralleled or non-paralleled metal conduction plates or geometric solids with the thickness of δ≥0 and interval of d≥0, which are respectively paralleled or non-paralleled with the positive and negative electrode plates of the permanent electrical field; the cross section or longitudinal section or both cross section and longitudinal section of the positive and negative electrode plates of the induced charge generator of the induced electromagnetic field are rectangular or square or trapeziform or triangular or polygonal with curved side lines or blended curve surface with a tip of geometric structure, or circular, or elliptic, or geometric solid combining several geometric shapes, or any other geometric solid, with its center or any part designed and fabricated / non-fabricated into any geometric conductor which is rectangular or trapeziform or triangular or arc or elliptic or any other geometric shape with a cubage of V≧0; it may as well be an arced rectangular, □-shaped or right-angle cross section, with the space around the two paralleled plates filled with insulating medium, and the positive electrode and negative electrode plate respectively lead or don't lead a charging and discharging connector or conductor wire; the paralleled metal plates of the positive and negative electrodes of the permanent electrical field and all paralleled metal electrode plates of this invention as well as the insulating medium between them shall be altogether made into a cylinder, or concentric cylinder whose quantity of coil or layer is i≥0, or made into a piled columniform, cuboid, elliptical cylinder, or any other geometrical solid, or any compound geometrical solid, or the geometrical solid or any other geometrical solid whose longitudinal section, or longitudinal section and cross section is the rectangle, square, trapezium, triangle, curve polygon, hybrid curve and surface with the tipped geometrical structure, elliptical form, geometrical solid compounded by several geometrical forms, or any other geometrical solids, the quantity of coil or layer of which shall be i≥0, they shall be made into the geometrical conductor, in the middle or any part of it, a rectangle, trapezium, triangle, arc, ellipse, any other geometrical form, or any other geometrical solid with the cubage of V≧0 slot shall be designed or made; the surrounding space of the two paralleled electrode plates are filled with insulating medium, and the positive and negative electrode plates are paralleled with an interval of d≧0, and i≥0 one-way communication diodes connected in the two-way or one-way manner with the positive and negative electrode plates with an interval of d≥0 between them forwardly or reversely in the E₀ direction of permanent electrical field; the length or width or thickness of the positive and negative electrode plates of the induced charge generator of induced electric field had better be smaller, bigger or equal to those of the positive and negative electrode plates of the permanent electrical field; the positive and negative electrode plates of the induced charge generator of the induced electric field, on both ends or one end along the length or width direction, go parallel to and superpose or don't go parallel to and superpose respectively the positive electrode plate and negative electrode plate of the induced electromotive force power source and the induced electrical the induced electrical charge generator, they are communicated with and connected to each other, or are made into one, or the internal plane of the positive electrode plate and negative electrode plate of the induced electrical charge generator of the induced electrical field and the internal plane of the positive electrode plate and negative electrode plate of the induced electromotive force power source and the induced electrical charge generator are respectively communicated with or connected closely to the external side of the positive electrode plate and negative electrode plate of the one-way communication conductor inside the power source of the induced electrical charges, or they are integrated into one body. The taper, cuniform, pin single-surface diagonal openings of the positive electrode plate and the negative electrode plate stand face to face, back to back, centrosymmetrically, or symmetrically along the axial core. The taper, cuniform pin, pointed double-surface skew openings of the positive electrode plate and the negative electrode plate stand face to face, back to back, symmetrically along the axial core, or centrosymmetrically. Except the channel left in advance as track for escape and emission of the induced electrical charges at the tip of the conductor, the remaining parts outside the two parallel plates shall be filled by the insulating medium or not. The two relatively parallel surfaces of the positive electrode plate and the negative electrode plate are fully and mutually communicated and connected and they are d≥0 away from each other. The positive electrode plate and the negative electrode plate of the induced electromotive force power source and the induced electrical charge generator are respectively jointed, communicated with and connected to the positive electrode plate and the negative electrode plate of the induced electrical charge generator, or integrated into one. After they are communicated or connected to the positive electrode plate and the negative electrode plate of the induced electrical charge generator, or integrated into one. After they are communicated or connected or integrated into one, the total length, width and thickness may be longer, wider, or thicker than those of the positive electrode plate and the negative electrode plate of the permanent electrical field or equivalent to those in these aspects; the charge escape / emission power generator of the permanently induced electromagnetic field conductor with variable cross-section provides the overall **characterized in that**: the first is that the inventive creation and scientific discovery use the permanent electrical field, the second is that the invention uses the induced electromagnetic field of the permanent electrical field, the third is that the invention uses the principle that the permanent electromagnetic field separates the positive and negative induced charges after the metal conductor inside the permanent electrical field, i.e., the one-way communication conductor inside the induced charge generator and induced charge power source, generates the electromagnetic induction, the fourth is that the invention, creation and scientific discovery use the principle that charges are escaped and emitted from the tip of the metal conductor of variable cross section, variable linearity, conic shape, single or double heads, single or double slants, different or equal pitch in the permanent electromagnetic field, i.e., the tip of the induced electromotive power source and induced electrical charge power generator, as well as the induced electrical charge escape emitter, the fifth is that the invention, creation and scientific discovery use the rechargeable photoelectric or battery of charging by friction, charging capacitor, chargeable environment friendly permanent-operating power source, and permanent amplification charger of permanent power source and permanent electrical field that comprises of the charging switch and power cut switch, to ensure that the permanent power source continuously and permanently outputs the induced electrical charge and electric energy; the tip of the cross section of the induced electromotive power source and induced electrical charge generator is a conic, cuniform or pointed metal conductor; the reduced thickness δ₂ of the positive and negative electrode plates of the induced electromotive power source and induced electrical charge generator is less than the thickness δ₁ of the positive and negative electrode plates of the induced charge generator.

6. A power generator for automatic escape and emission of charges on conductor with the variable cross-section in the permanently induced electromagnetic field according to Claim 1, **characterized in that**: the induced charge absorber of the power generator for automatic escape and emission of charges on conductor with the variable cross-section in the permanently induced electromagnetic field comprises of a pair of δ-thick paralleled metal conductor plates or two U-shaped metal conductors or any geometric solids for storage of positive and negative electric charges, i.e., the positive and negative electrode plates of the induced electrical charge absorber; the positive and negative electrode plates respectively lead or don't lead a charging wire conductor, and the space around the positive and negative electrode plates is filled with insulating medium; the positive and negative electrode plates of the induced charge absorber are respectively installed outside the conic, cuniform or pointed tip of the positive and negative electrode plates of the induced electromotive power source and induced electrical charge generator, with a distance of d≥0 or d < 0.

7. A power generator for automatic escape and emission of charges on conductor with the variable cross-section in the permanently induced electromagnetic field according to Claim 1, **characterized in that**: the induced electrical charge escape emitter of the automatic charge escape and emission power generator of the permanently induced electromagnetic field conductor with variable cross-section has its cross section shaped as a rectangle, single-ended single-surface taper, single-ended single-surface cuniform, single-ended double-surface cuniform, single-ended single-surface pin, single-ended double-surface pin, double-ended single-surface taper, double-ended double-surface cuniform, double-ended double-surface pin, or double-ended double-surface taper or other freeform shape; its vertical section as a circle, or rectangle, or a pointed metal conductor of parallelogram or diamond or trapezoid with variable cross section and linearity; it also has its positive and negative electrode plates respectively connected with the positive and negative electrode plates of the induced electromotive power source and induced electrical charge generator through conductive wire or switch, or they are directly integrated as one piece; the space of the positive and negative electrode metal conductors of induced electrical charge escape emitter, other than those that receive the positive and negative charges and emit the positive and negative charges, is all filled with the insulating medium; the induced electrical charge receiver features a pair of metal conductor or metal conductor plate or metal conductor sphere that are able to receive respectively the positive electrical charges and the negative electrical charges, the cross-section of which is a rectangle, trapezium, triangle, parallelogram, or ellipse, or any geometrical body; a lead shall be connected and drawn or not from the positive electrode metal conductor and the negative electrode metal conductor of the induced electrical charge receiver respectively for output of the positive electrical charges and the negative electrical charges; the positive electrode metal conductor and the negative electrode metal conductor of the induced electrical charge receiver are connected by lead respectively to the output positive electrode and output negative electrode of the power generator for automatic escape and emission of electrical charges on the conductor with the variable section in the permanently induced electromagnetic field; except the parts for receiving and exporting the positive electrical charges and the negative electrical charges, all parts left on the positive electrode metal conductor and the negative electrode metal conductor of the induced electrical charge receiver shall be filled by the insulating medium; the induced electrical charge accelerator features a pair of parallel metal conductor plates that are able to store the positive electrical charges and the negative electrical charges respectively and are δ≥0 thick; a lead will be drawn from the positive electrode plate and the negative electrode plate respectively for charging; the surrounding of the positive electrode plate and the negative electrode plate is filled by the insulating medium; the central axes of the positive electrode plate and the negative electrode plate of the induced electrical charge accelerator for accelerating the positive electrical charges go parallel to each other and superpose, and besides, they go parallel to and superpose or not the central axes of the positive electrode plate and the negative electrode plate of the induced electrical charge accelerator for emitting the induced positive electrical charges; the subuliform tip end of the positive electrode metal conductor of the induced electrical charge escape emitter is d≥-c away from the junction point of the positive electrode plate plane of the induced electrical charge accelerator facing the negative electrode plate and the central axis; the central axes of the negative electrode plate and the negative electrode plate of the induced electrical charge accelerator for accelerating the positive electrical charges go parallel to and superpose, or go parallel to and superpose the central axes of the positive electrode plate of the induced electrical charge accelerator, and the distance between the negative electrode plate of the induced electrical charge accelerator for accelerating the positive electrical charges and the positive electrode plate of the induced electrical charge receiver is d≥-c; the central axes of the positive and negative electrode plates of the induced electrical charge accelerator for accelerating the positive electrical charges go parallel to each other and superpose, and besides, they go parallel to and superpose or not the central axes of the positive electrode plate and the negative electrode plate of the induced electrical charge escape emitter for emitting the induced negative electrical charges; the subuliform tip end of the negative electrode metal conductor of the induced electrical charge escape emitter is d≥-c away from the junction point of the positive electrode plate plane of the induced electrical charge accelerator facing the negative electrode plate and the central axis; the negative electrode plate of the induced electrical charge accelerator is mutually insulated from the negative electrode metal conductor of the induced electrical charge escape emitter or not.

8. A power generator for automatic escape and emission of charges on conductor with the variable cross-section in the permanently induced electromagnetic field according to Claim 1, **characterized in that**: the automatic-control regulating shield comprises of the static screening net, screening net coupling and securing stand and the automatic static screening regulator and controller; the static screening net is a wire mesh or metal plate, it is coupled and secured by the screening coupling stand and is parallel to the parallel plates of the permanent electrical field, it is designed with the randomly plugged-in / drawn-out slide structure, driven by the automatic static screening and regulator controller, it will be plugged in and drawn out by certain vibration frequency f≥0 from the long seam between the permanent electrical field on the end other than electrical charge output and the induced electrical charge generator and the seam width is b≥0, the plug-in depth t≥0 and the plug-in and drawn-out vibration frequency f≥0 can be adjusted manually or automatically; the coupling and securing stand of the screening net is fixed and coupled in the way it is aligned to and superposes the center of the permanent magnetic piston of the automatic static screening regulator and controller; the automatic static screening regulator and controller comprises of the electromagnetic core coil, the permanent magnet piston, vibration spring, piston cylinder, piston rod, and the piston cylinder securing socket; the electromagnetic core coil is installed on one end of the permanent magnetic piston and the vibration distance for the vibration amplitude is reserved in advance, the other end of the permanent magnet piston is installed with a piston rod, on which a vibrative spring is set, the free end of the piston rod is secured, coupled or integrated into one with the power source once-only starter, the permanent magnet piston is plugged inside the piston cylinder, which is secured on the machine body through a socket; the manual / automatic power current regulator comprises of the regulating / fixing bracket of the induced electrical charge receiver, the regulating bolt with a clearance of δ≥0 between the induced electrical charge receiver and induced electrical charge escape emitter, regulating handwheel and current meter; the fixing bracket of the induced electrical charge receiver is connected with the induced electrical charge receiver in its center, with its two ends connected with the machine body in a sliding manner; the regulating bolt provides the support in the threaded hole of the machine body, with one end rotatablely connected with the fixing bracket of the induced electrical charge receiver, and the other end fixedly connected with the regulating handwheel; the power output voltage regulator comprises of the potentiometer, voltage meter and current meter; the potentiometer is serialized, while the voltage meter is paralleled; the one-time button starter of power source comprises of the button head and rod; the button rod is integrated with the piston rod of the static screening device; the cross section of the power source output switch circuit is the same with that of the induced electromotive power source and induced electrical charge generator, and their head and cross section respectively connect to form a combined geometric solid with a variable clearance of d≥0, which is free from inclined cut and emission of electrical charges, **characterized in that**: and comprises of switch and protection device, the switch is serialized with the protection device on one end, and connected with the output end of the induced electromotive power source and induced electrical charge generator on the other end, while the protection device is connected with the bigger head of the induced electrical charge escape emitter on the other end.

9. A power generator for automatic escape and emission of charges on conductor with the variable cross-section in the permanently induced electromagnetic field according to Claim 1, **characterized in that**: the permanent electrical field charger of the power generator for automatic escape and emission of charges on conductor with the variable cross-section in the permanently induced electromagnetic field comprises of the button switch, charger battery, protection device, regulating resistor, voltage meter and current meter; the button switch, charger battery, protection device, regulating resistor, and current meter are serialized in turn, and then paralleled with the voltage meter, while the output positive and negative electrodes are respectively connected with the positive and negative electrodes of the permanent electrical field for charging; the permanently-operating amplification charger of the permanent electrical field comprises of the chargeable environment friendly permanent-operating power source, chargeable capacitor, chargeable photocell, chargeable battery charged by friction, escape emitter for charged positive electrical charges fed back by chargeable power source towards chargeable capacitor, positive electrical charge receiver for feedback charge from chargeable power source towards the chargeable capacitor, negative electrical charge receiver for feedback charging from the chargeable power source towards the chargeable capacitor, chargeable voltmeter of the permanent electrical field, power cut-off switch of the permanently-operating power source-permanently-operating power source permanent electrical field power cut-off- discharge switch, positive electrode and negative electrode two-wire chargeable switch of the permanently-operating power source permanent electrical field, output voltmeter of the chargeable environment friendly permanent-operating power source, output regulation compensation load of the chargeable environment friendly permanent-operating power source, the positive electrode and negative electrode two-wire switch for feedback charging by chargeable environment friendly permanent-operating power source towards the chargeable capacitor, the positive electrode and negative electrode two-wire switch for feedback charging from the chargeable capacitor towards the chargeable power source permanent electrical field, voltmeter of the chargeable capacitor, chargeable environment friendly permanent-operating power source permanent electrical field power cut-off - discharge switch, two-wire switch of the positive electrode and negative electrode of the chargeable photocell, chargeable photocell voltmeter, chargeable photocell ammeter and the connecting wire; the chargeable environmental friendly permanently-operating power source comprises of the chargeable environment friendly permanent-operating power source positive electrode plate of the permanent electrical field, chargeable environment friendly permanent-operating power source permanent electrical field negative electrode plate, chargeable power source positive electrode plate of the induced charge generator, chargeable power source induced charge generator negative electrode plate, chargeable power source induced electrical charge generator in the shape of single / double-end equivalent or unequivalent gradient double / single - subuliform or any other geometrical solid - positive electrode plate and negative electrode plate of the induced electrical charge escape emitter, the positive electrode plate of induced electrical charge receiver, the negative electrode plate of the induced electrical charge receiver and the insulating medium; the positive electrode plate and the negative electrode plate of the chargeable photocell are connected by lead respectively through parallel connection to the chargeable photocell voltmeter, which in turn is connected respectively to the positive electrode and the negative electrode of the chargeable photocell ammeter and two-wire switch for the positive electrode and negative electrode of the chargeable photocell; in addition, they are connected in series to the positive electrode and negative electrode of the chargeable capacitor; the positive / negative electrode two-wire switch of the chargeable photocell is installed on the internal side of the machine body or machine cover of the permanently-operating power source; knob of the two-wire switch handle comes out from the machine body of the permanent power source; after the positive electrode plate and negative electrode plate of the induced electrical charge receiver of the chargeable environmental friendly permanently-operating power source are connected through parallel connection to the output voltmeter of the chargeable environmental friendly permanently-operating power source and the chargeable environmental friendly permanently-operating power source output adjustment and compensation load, it is in turn connected respectively through lead to the positive electrode plate and negative electrode plate of the positive / negative two-wire switch of the permanent electrical field of the permanently-operating power source and is connected to the positive electrode and negative electrode of the permanent electrical field of the permanently-operating power source; the positive / negative electrode two-wire chargeable switch of the permanent electrical field of the permanently-operating power source is installed on the internal side of the machine body or machine cover of the permanently-operating power source; press button of the handle of the two-wire switch comes out from the machine body of the permanently-operating power source; the positive electrode plate and negative electrode plate of the induced electrical charge receiver of the permanently-operating power source are connected respectively through the connecting lead to the positive electrode and negative electrode of the positive / negative electrode two-wire switch for feedback charging from the chargeable capacitor to the permanently-operating power source, the charged positive electrical charge escape emitter for feedback charging from the chargeable permanently-operating power source to the chargeable capacitor, the charged negative electrical charge escape emitter for feedback charging from the chargeable permanently-operating power source to the chargeable capacitor, the positive electrode and negative electrode of the chargeable capacitor; the connecting lead between the induced electrical charge escape emitter and the induced electrical charge receiver shall be taken out; the clearance δ≥0 is adjustable; the central axis of the induced electrical charge escape emitter shall go parallel with or superpose the central axis of the induced electrical charge receiver; the cross section of the fed back charged charge escape emitter is a dual-subuliform surface with the equivalent gradient, taper or cuniform or pinpoint, cylinder, or pyramid or pinpoint metal conductor or any other geometrical solid; the cross section of the fed back charged charge receiver is circular sphere metal conductor, a rectangular cuboid metal conductor, or any other geometrical solid; the power cutoff switch of the permanently-operating power source, i.e., the positive electrode and negative electrode of the power cutoff / discharge switch of the permanent electrical field of the permanently-operating power source are connected respectively to the positive electrode and negative electrode of the permanent electrical field of the permanently-operating power source; the power cutoff / discharge switch of the permanent electrical field of the permanently-operating power source is installed on the machine body of the permanently-operating power source or the internal side of the machine body cover; knob of the switch handle shows up outside the machine body of the permanently-operating power source; the positive electrode and negative electrode of the power cutoff / discharge switch of the permanent electrical field of the chargeable environment friendly permanent-operating power source are connected respectively to the positive electrode plate and the negative electrode plate of the permanent electrical field of the chargeable environment friendly permanent-operating power source; the power cutoff / discharge switch of the permanent electrical field of the chargeable environment friendly permanent-operating power source is installed on the machine body or the internal side of the machine body of the permanently-operating power source; knob of the switch handle shows up outside the machine body of the permanently-operating power source; the permanently-operating amplification charger of the permanent electrical field is installed inside the machine body of the power source; the power cutoff / discharge device of the environment friendly permanently-operating power source comprises of the power cutoff / discharge device of the permanent electrical field of the environment friendly permanently-operating power source and the power cutoff / discharge device of the chargeable environment friendly permanent-operating power source permanent electrical field; the power cutoff / discharge device of the permanent electrical field of the environment friendly permanently-operating power source comprises of the power cutoff / discharge device of the permanent electrical field of the environment friendly permanently-operating power source and the connecting lead; the positive electrode and negative electrode of the power cutoff / discharge device of the permanent electrical field of the environment friendly permanently-operating power source are connected respectively through the connecting lead to the positive electrode plate and negative electrode plate of the permanent electrical field of the environment friendly permanently-operating power source; the power cutoff / discharge device of the permanent electrical field of the chargeable environment friendly permanently-operating power source comprises of the power cutoff / charge switch of the permanent electrical field of the chargeable environment friendly permanent-operating power source and the connecting lead; the positive electrode and negative electrode of the power cutoff / discharge device of the permanent electrical field of the chargeable environment friendly permanent-operating power source are connected respectively through lead and are connected respectively to the positive electrode plate and negative electrode plate of the permanent electrical field of the chargeable environment friendly permanent-operating power source; the attractor charger comprises of the button switch, charger's battery, safe, voltage regulating resistance, voltmeter and ammeter; the button switch, charger's battery, safe, voltage regulating resistance and ammeter are connected in series in turn and they are connected through parallel connection to the voltmeter in the last to export the positive electrical charges and the negative electrical charges; they can be connected respectively to the positive electrode plate and negative electrode plate of the attractor; or the chargeable capacitor of the permanently amplification charger of the permanent electrical field might be connected to the connecting lead; then, they will be connected respectively to the positive electrode plate and the negative electrode plate of the attractor for charging through the chargeable switch of the attractor; the accelerator charger: it comprises of the button switch, charger's battery, safe, voltage regulating resistance, voltmeter and ammeter; the button switch, charger's battery, safe, voltage regulating resistance and ammeter are connected in series in turn; at last, they are connected through parallel connection to the voltmeter; the positive output electrode and negative output electrode may be connected respectively to the positive electrode plate and the negative electrode plate of the accelerator for charging; or, the chargeable electrical capacitor of the permanent electrical field may be connected by a connecting lead, which, may be connected respectively through the chargeable switch of the accelerator, to the positive electrode plate and negative electrode plate of the accelerator for charging.

10. A power generator for automatic escape and emission of charges on conductor with the variable cross-section in the permanently induced electromagnetic field according to Claim 1, **characterized in that**: the cross section of the machine body is a circular cylinder, a rectangular cuboid, elliptic cylinder, circular sphere, or any other geometrical solid with any random cross section; all components and parts of this invention are installed inside the machine body of the power source; the diameter of the ten wire posts A, B, C, D, E, F, G, H, I and J of the permanently-operating power source is d≥0 respectively, one end of the wire posts is hidden in or shows up outside the machine body of the power source or the external side of the machine body cover; the power source loads: one end of the load switch is connected to the positive output electrode of the power generator of this invention and the other end is connected in series to the load safe, then, they will be connected in turn in series to the voltage regulator and the load, and is connected to the negative electrode load of the power generator of this invention.
